(19) Europäisches Patentamt
European Patent Office
Office européen des brevets

(11) **EP 1 293 388 B1**

(12) **EUROPÄISCHE PATENTSCHRIFT**

(45) Veröffentlichungstag und Bekanntmachung des Hinweises auf die Patenterteilung:
**09.02.2011  Patentblatt 2011/06**

(51) Int Cl.:
*H02J 7/14* (2006.01)       *B60L 15/20* (2006.01)
*B60R 16/02* (2006.01)

(21) Anmeldenummer: **02015032.2**

(22) Anmeldetag: **05.07.2002**

(54) **Energiemanagementvorrichtung und -verfahren zum Energiemanagement in einem Fahrzeug**

Energy management device and method for energy management in a vehicle

Dispositif et méthode pour la gestion d'énergie dans un véhicule

(84) Benannte Vertragsstaaten:
**ES FR GB IT**

(30) Priorität: **14.09.2001  DE 10145270**

(43) Veröffentlichungstag der Anmeldung:
**19.03.2003  Patentblatt 2003/12**

(73) Patentinhaber: **AUDI AG**
**85045 Ingolstadt (DE)**

(72) Erfinder: **Zuber, Manfred**
**92334 Berching (DE)**

(74) Vertreter: **Thielmann, Frank**
**AUDI AG,**
**Patentabteilung**
**85045 Ingolstadt (DE)**

(56) Entgegenhaltungen:
| | |
|---|---|
| EP-A- 1 093 974 | EP-A- 1 103 426 |
| DE-A- 19 745 849 | DE-A- 19 960 079 |
| FR-A- 2 790 428 | US-A- 5 345 761 |

**Beschreibung**

Die vorliegende Erfindung betrifft eine Energiemanagementvorrichtung zum Energiemanagement in einem Fahrzeug sowie ein Energiemanagementverfahren zum Energiemanagement in einem Fahrzeug.

Die zunehmende Anzahl an Verbrauchersystemen in Fahrzeugen stellt für die Energieversorgung eine besondere Herausforderung hinsichtlich Leistungsfähigkeit und Zuverlässigkeit dar. Aufgabe ist dabei die bedarfsgerechte Verteilung der erzeugten Energie auf die einzelnen Verbrauchersysteme. Auch ist dafür Sorge zu tragen, daß der Batterie ausreichend Ladestrom zur Verfügung gestellt wird, damit das Fahrzeug auch unter ungünstigsten Betriebsbedingungen stets startfähig bleibt.

Aus der DE 198 57 916 sind Verbraucherkoordinatoren bekannt, die Leistungen anfordern und Verbrauchergruppen steuern. Die DE 197 45 849 befaßt sich mit der Integration der Generator- und Batteriediagnose in das Energiemanagement. Hierbei wird der Generator zur Kopplung von Antriebs- und Energiemanagement gesteuert. Ein integraler Bestandteil der Regelstrategie besteht darin, die Energienetzspannung konstant zu halten. Weiterhin beschreibt die DE 196 10 927 das schrittweise Zuschalten von Verbrauchern beim bzw. nach einem Motorstart.

Aus der US 6,208,931 B1 geht eine Vorrichtung zur Energieverteilung in einem Fahrzeug hervor mit einem von einer Brennkraftmaschine angetriebenen Generator, der ein Bordnetz mit elektrischer Leistung versorgt. Die Energieverteilung wird dabei mithilfe einer Steuereinrichtung, die als Bordnetzmanager arbeitet, realisiert. Der Steuereinheit werden erforderliche Informationen zugeführt, aus denen sie eine Regelstrategie für die Regelung der Komponenten des Bordnetzes und der Brennkraftmaschine durchführt. Die Energieverteilung zwischen Bordnetz und Brennkraftmaschine erfolgt gemäß vorgebbaren Anforderungen unter Berücksichtigung der Bedingung, dass die Bordnetz-Sollspannung innerhalb vorgebbarer Grenzen liegt.

Aus der EP 1 103 426 A1 ist ein Verfahren zur Leistungsverteilung, insbesondere zur Verteilung der elektrischen Leistung in einem Kraftfahrzeugbordnetz beschrieben, bei dem den Komponenten des Bordnetzes, beispielsweise der Batterie, dem Generator und den Verbrauchern, Kennlinien zugeordnet werden, in denen eine normierte Bewertungszahl in Abhängigkeit von der Leistung dargestellt wird und die momentane Verteilung der Leistung so erfolgt, dass unter Berücksichtigung der einzelnen Kennlinien ein vorgebbares Optimierungsprinzip angestrebt wird. Dabei können fixe Leistungen für Komponenten, die beispielsweise nicht an einem Bordnetzmanagement teilnehmen, oder sicherheitsrelevante Komponenten, auf die kein Einfluss genommen werden darf, in ihrer Summe als Zusatzkennlinie mit genau einem erlaubten Betriebspunkt mit in die Berechnung einfließen.

Allen aus dem Stand der Technik bekannten Dokumenten ist der Nachteil gemeinsam, daß sie keine optimale Ausnutzung der verfügbaren Energie ermöglichen, beispielsweise für die Zuschaltung eines Verbrauchers, dessen Energiebedarf bei laufendem Motor nicht mehr vom Generator bereitgestellt werden kann deshalb zu einer Entladung der Fahrzeugbatterie führt. Ein häufiges Laden und Entladen der Fahrzeugbatterie führt jedoch zu einer deutlichen Reduzierung deren Lebensdauer. Ein Unterbleiben des Zuschaltens des Verbrauchers kann aber zu Einbußen bei Sicherheit und Komfort führen.

Die Aufgabe der vorliegenden Erfindung liegt deshalb darin, eine verbesserte Vorrichtung und ein verbessertes Verfahren zum Energiemanagement in einem Kraftfahrzeug bereitzustellen.

Diese Aufgabe wird erfindungsgemäß gelöst durch eine Energiemanagementvorrichtung gemäß Anspruch 1 zum Energiemanagement in einem Fahrzeug mit einer Prädiktoreinheit zur Bestimmung einer Leistungsreserve oder einer Überlast DP in einem Energienetz des Fahrzeugs, wobei das Energienetz mindestens eine Batterie und einen Generator des Fahrzeugs umfaßt, wobei die Prädiktoreinheit dazu ausgelegt ist, mindestens folgende Eingangsgrößen zu erfassen: eine maximal abgebbare Leistung $P_{max}$ des Generators, eine tatsächlich abgegebene Leistung $P_{gen}$ des Generators, einen Strom $I_{batt}$ zur Batterie und eine Spannung $U_{batt}$ der Batterie, wobei die Prädiktoreinheit weiterhin dazu ausgelegt ist, die Leistungsreserve oder Überlast DP aus diesen Eingangsgrößen und einem vorbestimmten Wert für eine Generatorauslastungsbegrenzung K durch den Algorithmus

$$DP = (P_{max} - P_{gen} - K) + (I_{batt} * U_{batt}) * D + X \qquad\qquad 1)$$

zu berechnen, wobei der Term D gleich 0 gesetzt wird, wenn $I_{batt} > 0$ ist, und wobei der Term X gleich 0 oder ungleich 0 ist.

Der Grundgedanke der vorliegenden Erfindung besteht im Vorsehen eines präventiven Energiemanagements, das heißt die im Energienetz zur Verfügung stehende Leistung bzw. Überlast wird prädiziert. Basierend auf diesem Signal werden die Verbrauchersysteme geregelt. Dadurch, daß die Leistungsreserve oder Überlast zumindest zu den Zeitpunkten ermittelt wird, zu denen eine Bedienperson manuell oder ein Steuergerät automatisch einen Verbraucher zuschalten möchte oder einen bereits zugeschalteten Verbraucher auf eine höhere Energieverbrauchsstufe schalten möchte, kann vorhergesagt werden, ob ein Zuschalten des Verbrauchers problematisch oder kritisch ist und daher unterbleiben sollte. Für den Fall, daß es sich um einen sicherheitsrelevanten Verbraucher handelt, dessen Zuschaltung unbedingt nötig ist, kann eine Priorität vorgesehen werden. Für den Fall, daß die im Bordnetz vorhandene Leistungsreserve das Zuschalten des Verbrauchers mit höherer Priorität nicht gestattet kann zunächst ein Verbraucher mit niedriger Priorität abgeschaltet werden oder für diesen Fall wird akzeptiert, daß die Versorgung teilweise aus der Fahrzeugbatterie bereitgestellt wird.

Durch diese Maßnahme wird eine häufiges Laden und Entladen der Fahrzeugbatterie verhindert und dadurch deren Lebensdauer verlängert. Weiterhin wird eine unerwünschte Überlastung des Bordnetzes des Fahrzeugs und damit gegebenenfalls der Ausfall wichtiger Verbraucher verhindert, was in einem signifikanten Sicherheitszuwachs resultiert.

Da die im Energienetz des Fahrzeugs vorhandene Energie dynamisch ermittelt wird, ist die Prädiktion adaptiv, das heißt die Akzeptanzschwelle für die Auslastung des Energienetzes ist abhängig vom Einschaltzustand der Verbrauchersysteme.

Bevorzugt liegt der Wert für eine Generatorauslastungsbegrenzung K zwischen 0 W und 250 W, insbesondere zwischen 50 W und 150 W. Durch diese Maßnahme wird sichergestellt, daß der Generator nicht über einen längeren Zeitraum mit Vollast betrieben wird, was in einer Erhöhung seiner Lebensdauer resultiert. Das Vorhalten einer Generatorauslastungsbegrenzung K ermöglicht auch einen Zeitgewinn für die Zuschaltung von Verbrauchern, insbesondere sicherheitsrelevanten Verbrauchern, ohne daß ein unzulässig hoher Spannungseinbruch entsteht.

Vorzugsweise umfaßt der Term X einen Korrekturterm - A, wenn $U_{batt} < U_{min}$ ist, wobei $U_{min}$ insbesondere 12 V oder 36 V beträgt, wobei A insbesondere 400 W beträgt. Hierdurch kann eine Sicherheitsreserve für den Fall von Unterspannung, das heißt die Batteriespannung liegt unter einem vorgegebenen Schwellwert $U_{min}$, bereitgestellt werden.

Die Prädiktoreinheit kann bevorzugt auch ausgelegt werden als weitere Eingangsgröße einen Strom $I_{gen}$ vom Generator weg zu erfassen, wobei die Prädiktoreinheit weiterhin dazu ausgelegt ist, die Leistungsreserve oder Überlast DP neben den Eingangsgrößen und dem vorbestimmten Wert für die Generatorauslastungsbegrenzung K aus der weiteren Eingangsgröße und einem vorbestimmten unteren Grenzwert für die Batterie- oder Energienetzspannung $U_{grenze}$ durch den genannten Algorithmus zu berechnen, wobei der Term X einen Term + ($U_{batt}$ - $U_{grenze}$) * B * ($I_{gen}$ - $I_{batt}$) umfaßt, der spezifisch für eine Leistungsdifferenz aufgrund eines Spannungseinbruchs durch mindestens einen Verbraucher ist, wobei B einen Korrekturfaktor darstellt, der insbesondere im Bereich zwischen 0,5 und 2 liegt und $U_{batt}$· für die Spannung der Batterie oder die Spannung des Energienetzes steht. Wenn beispielsweise $U_{grenze}$ 12,8 V beträgt, die augenblickliche Batteriespannung 14 V beträgt, der Generatorstrom 150 A, der Batteriestrom 50 A und B=1, so ergibt sich eine Leistungsreserve des Bordnetzes von 120 V, die für das Einschalten eines neuen Verbrauchers oder die Erhöhung des Leistungsverbrauchs eines bereits eingeschalteten Verbrauchers verwendet werden kann. In anderen Worten ermöglicht dieser Term eine noch präziserer Ausnutzung der im Bordnetz vorhandenen Energie.

Zur Bestimmung der maximal vom Generator abgebbaren Leistung $P_{max}$ kann in der Prädiktoreinheit ein Generatormodell abgelegt sein, mit dessen Hilfe aus einer Drehzahl n eines Motors des Fahrzeugs und einer für eine Temperatur des Generators signifikanten Temperatur T der Wert von $P_{max}$ bestimmbar ist. Die Temperatur T kann hierbei insbesondere eine Kühlwassertemperatur sein. Dieses Modell berücksichtigt bei geringem Aufwand die Abhängigkeit der Generatorleistung von der Temperatur und der Drehzahl des Motors.

Die Energiemanagementvorrichtung umfaßt bevorzugt mindestens ein Meßelement, das zur Ermittlung mindestens einer der Eingangsgrößen und/oder der Drehzahl n und/oder der Temperatur T und/oder der weiteren Eingangsgröße ausgebildet ist, wobei das mindestens eine Meßelement zur Übermittlung der mindestens einen Eingangsgröße und/oder der Drehzahl n und/oder der Temperatur T und/oder der weiteren Eingangsgröße mit der Prädiktoreinheit verbunden ist. Soweit wie möglich wird selbstverständlich auf Meßelemente zurückgegriffen, die bereits im Fahrzeug vorhanden sind. Lediglich für den Fall, daß weitere Größen zu ermitteln sind, die bisher beispielsweise im Motorsteuerergerät noch nicht vorliegen, sind derartige zusätzliche Meßelemente vorzusehen.

Bevorzugt ist das mindestens eine Meßelement dazu ausgebildet, die entsprechende Größe mit jeweils einer ersten Rate zu ermitteln und/oder mit jeweils einer zweiten Rate an die Prädiktoreinheit zu übermitteln. Selbstverständlich kann die Ermittlung der entsprechenden Größe auch mit der zweiten Rate erfolgen. Bevorzugt liegen die erste und/oder die zweite Rate im Bereich von 1/1000 ms$^{-1}$ bis 1/10 ms$^{-1}$, insbesondere im wesentlichen 1/100 ms$^{-1}$.

Zur Verhinderung von Schwingungen, das heißt zur Realisierung einer Schwingungsunterdrückung, weist eine erfindungsgemäße Energiemanagementvorrichtung einen Filter zur Filterung der in Abhängigkeit der Zeit ermittelten Leistungsreserve oder Überlast DP auf, wobei der Filter eine Integratoreinheit umfaßt, die wie folgt ausgelegt ist: jeweils nach einer vorbestimmten Zeitdauer $\Delta T_1$ ermittelte Werte für die Leistungsreserve oder Überlast DP werden zu einem Summenwert DPI aufsummiert, bis der Summenwert DPI einen oberen oder einen unteren Schwellenwert erreicht hat. Immer wenn der Summenwert DPI den oberen oder unteren Schwellenwert erreicht hat, wird ein Reset mit einem neuen Startpunkt für die Zeitdauer $\Delta T_1$ initiiert und der Summenwert DPI gleich 0 gesetzt. Weiterhin wird eine Zeitdauer $\Delta T_2$ bis zum Erreichen des oberen oder unteren Schwellenwerts ermittelt und schließlich wird der ermittelten Zeitdauer $\Delta T_2$ in Abhängigkeit davon, ob der obere oder der untere Schwellenwert erreicht wurde, ein Signal PSV zugeordnet, das die gefilterte Leistungsreserve oder Überlast codiert. Durch diese Maßnahme läßt sich eine ausreichende Spannungsstabilität des Energienetzes bei Einschalttransienten bzw. bei einem Drehzahlabfall erzielen, während häufige, insbesondere unkoordinierte Regelvorgänge vermieden werden.

Der Filter kann weiterhin eine Kontrolleinheit umfassen, die dazu ausgelegt ist, das Signal PSV in ein Signal PS zu übersetzen, wobei die Kontrolleinheit bevorzugt so ausgelegt ist, daß das Signal PSV in ein neutrales Signal $PS_N$ übersetzt wird, wenn das Signal PSV eine gefilterte Leistungsreserve codiert und ein m-tes Signal PSV nach mindestens einem PSV-Signal, das eine Überlast codiert, ist, wobei m bevorzugt eine natürliche Zahl von 1 bis 10, insbesondere von 1 bis 3, ist. Diese Maßnahme führt zu einer verzögerten Hochregelung der Systeme nach einer Überlastphase, das heißt, daß nicht bereits bei einem ersten Wert eines Signals PSV, daß eine Leistungsreserve anzeigt, die Systeme bereits wieder hochgeregelt werden, das heißt zunächst abgeschaltete Verbraucher wieder eingeschaltet werden, sondern zur Vermeidung eines andauernden Aus- und Einschaltens zunächst mehrere Leistungsreservewerte abgewartet werden um davon auszugehen, daß wieder einzuschaltende Verbraucher mit Aussicht auf einen längeren Einschaltzeitraum wieder eingeschaltet werden können.

Die Energiemanagementvorrichtung kann eine Leistungsstelleinheit umfassen, der die Leistungsreserve oder Überlast DP oder das Signal PSV oder das Signal PS übermittelbar ist, wobei die Leistungsstelleinheit dazu ausgelegt ist, die Leistungsreserve oder Überlast DP oder das Signal PSV oder das Signal PS in mindestens ein Steuersignal PP für mindestens einen Verbraucher zu übersetzen und das mindestens eine Steuersignal PP an den mindestens einen Verbraucher zu übermitteln. Eine derartige Ergänzung der Energiemanagementvorrichtung stellt sicher, daß die mit der Leistungsreserve oder Überlast korrelierten Signale in entsprechende Signale an die Verbraucher übersetzt werden bzw., daß eine entsprechende Koordination der Ein- und Ausschaltvorgänge der Verbraucher stattfindet.

Bevorzugt ist die Leistungsreserve oder Überlast DP oder das Signal PSV oder das Signal PS in Abhängigkeit von einer Priorität des mindestens einen Verbrauchers und/oder einer Leistungsanforderung des mindestens einen Verbrauchers und/oder einem Betriebszustand des mindestens einen Verbrauchers in das mindestens eine Steuersignal PP durch die Leistungsstelleinheit übersetzbar, wobei die Priorität des mindestens einen Verbrauchers und/oder die Leistungsanforderung des mindestens einen Verbrauchers und/oder der Betriebszustand des mindestens einen Verbrauchers in der Leistungsstelleinheit abgelegt oder durch die Leistungsstelleinheit ermittelbar ist. Eine derartige Weiterbildung der Leistungsstelleinheit erlaubt insbesondere die Berücksichtigung von Prioritäten der Verbraucher, beispielsweise einem vorrangigen Einschalten von sicherheitsrelevanten Verbrauchern gegenüber komfortbezogenen Verbrauchern.

Es kann vorgesehen werden, daß das mindestens eine Steuersignal PP eine stufenweise Erhöhung oder Erniedrigung einer Verbraucherleistung des mindestens einen Verbrauchers codiert. Durch diese Ausbildung muß nicht abgewartet werden, bis die Leistungsreserve für Volllastbetrieb des entsprechenden Verbrauchers im Bordnetz bereitgestellt wird, sondern sobald die erste Leistungsstufe des entsprechenden Verbrauchers erreicht ist, kann dieser, im Anforderungsfall, eingeschaltet werden.

Selbstverständlich kann das mindestens eine Steuersignal PP auch eine Ein-/Ausschaltung mindestens eines Verbrauchers codieren. Dies ist von Bedeutung für Verbraucher, die entweder ein- oder ausgeschaltet werden können, das heißt bei denen ein stufenweiser Betrieb keinen Sinn macht, beispielsweise die Aktivierung von Airbags.

Die Leistungsstelleinheit ist weiterhin bevorzugt dazu ausgelegt, eine erste Rückmeldung an den Filter und/oder die Prädiktoreinheit zu initiieren, einen sogenannten Handshake, wenn ein Stellvorgang des mindestens einen Verbrauchers durch das mindestens eine Steuersignal PP initiiert worden ist. Bevorzugt ist die Leistungsstelleinheit auch dazu ausgelegt, eine zweite Rückmeldung an den Filter und/oder die Prädiktoreinheit zu initiieren, wenn ein Stellvorgang des mindestens einen Verbrauchers durch das mindestens eine Steuersignal PP abgeschlossen ist. Diese Maßnahmen stellen sicher, daß es zu keinen Schwingungen kommt. Wenn sich beispielsweise die Einschaltung eines bestimmten Verbrauchers verzögert und die Leistungsstelleinheit davon ausgeht, daß dieser Verbraucher bereits eingeschaltet wäre und noch immer Energie im Bordnetz verfügbar ist, so könnte fälschlicherweise ein Einschaltsignal an einen weiteren Verbraucher gesendet werden, wobei dann, wenn beide Verbraucher eingeschaltet sind, eine Überlastsituation besteht. Dies wird wirkungsvoll vermieden, wenn der Einschaltvorgang des erst genannten Verbrauchers abgewartet wird, dann die im Bordnetz verfügbare Energie bestimmt wird, und erst aufgrund dieser Information einen Entscheidung getroffen wird, ob ein weiterer Verbraucher einzuschalten ist, oder nicht.

Bevorzugt wird dies dadurch realisiert, daß der Filter und/oder die Prädiktoreinheit durch die erste Rückmeldung in einen Wartemodus überführbar ist und/oder durch die zweite Rückmeldung ein Neustart initiierbar ist. Kombiniert werden kann dies mit der Maßnahme, daß die Leistungsreserve oder Überlast DP und/oder der Summenwert DPI und/oder das Signal PS und/oder das Signal PSV durch den Filter und/oder durch die Prädiktoreinheit in dem Wartemodus einen neutralen Wert erhält. Dies bedeutet, daß die Integration weiterhin stattfinden kann, jedoch das Ergebnis, während sich der Filter und/oder die Prädiktoreinheit im Wartemodus befindet unverändert bleibt. Aufwendige Steuerungsmaßnahmen und dergleichen können damit entfallen.

Für den Fall, daß ein zeitlicher Durchschnittswert PS* des Signals PS oder ein zeitlicher Durchschnittswert DP* der Leistungsreserve oder Überlast DP einen Schwellenwert erreicht, kann die Energiemanagementvorrichtung, insbesondere die Leistungsstelleinheit, dazu ausgelegt sein, ein Notabschaltungssignal zu erzeugen und an mindestens eine weitere Leistungsstelleinheit zu übermitteln. Diese Maßnahme führt zu einer weiteren Stabilisierung der Energieversorgung im Bordnetz eines Kraftfahrzeugs, insbesondere in Extremsituationen. Wenn beispielsweise die erste Leistungsstelleinheit ausgelegt ist, Hochleistungsheizsysteme zu regeln und trotz Abschaltung aller derartigen Hochleistungsheizsysteme noch immer ein Überlastzustand besteht, können Verbraucher, die sinnvollerweise über eine weitere Leistungsstelleinheit angesteuert werden, zur Beseitigung der Überlastsituation abgeschaltet werden.

Hierbei kann die Leistungsstelleinheit ausgelegt sein, das Notabschaltungssignal an die mindestens eine weitere Leistungsstelleinheit zu übermitteln, wenn der zeitliche Durchschnittswert PS* des Signals PS oder der zeitliche Durchschnittswert DP* der Leistungsreserve oder Überlast DP nach Abschluß des mindestens einen Stellvorgangs des mindestens einen Verbrauchers durch das mindestens eine Steuersignal PP einen Schwellenwert erreicht.

Bevorzugt ist hierbei die weitere Leistungsstelleinheit dazu ausgelegt, das Notabschaltungssignal in mindestens ein Steuersignal NAS für mindestens einen weiteren Verbraucher zu übersetzen und das mindestens eine Steuersignal NAS an den mindestens einen weiteren Verbraucher zu übermitteln. Hierdurch kann der Aufwand in der weiteren Leistungsstelleinheit reduziert werden, da die Erzeugung des Steuersignals NAS für alle weiteren Leistungsstelleinheiten in einer Einheit, bevorzugt in der ersten Leistungsstelleinheit bewirkt werden kann.

Auch das Notabschaltsignal kann in Abhängigkeit von einer Priorität des mindestens einen weiteren Verbrauchers und/oder einer Leistungsanforderung des mindestens einen weiteren Verbrauchers und/oder einem Betriebszustand des mindestens einen weiteren Verbrauchers durch die weitere Leistungsstelleinheit in das mindestens eine Steuersignal NAS übersetzbar sein, wobei die Priorität des mindestens einen weiteren Verbrauchers und/oder die Leistungsanforderung des mindestens einen weiteren Verbrauchers und/oder der Betriebszustand des mindestens einen weiteren Verbrauchers in der weiteren Leistungsstelleinheit abgelegt oder durch die weitere Leistungsstelleinheit ermittelbar ist.

Ebenfalls sinnvoll ist, daß das mindestens eine Steuersignal NAS eine stufenweise Erhöhung oder Erniedrigung einer Verbraucherleistung des mindestens einen weiteren Verbrauchers codiert. Insbesondere für Verbraucher bei denen eine stufenweise Erhöhung oder Erniedrigung einer Verbraucherleistung keinen Sinn macht, kann das mindestens eine Steuersignal NAS eine Ein-/Ausschaltung des mindestens einen weiteren Verbrauchers codieren.

Für den Fall, daß selbst die Notabschaltung keine ausreichende Anhebung des Energieniveaus des Bordnetzes bringt oder alternativ hierzu kann die Leistungsstelleinheit oder die weitere Leistungsstelleinheit dazu ausgelegt sein, ein Leerlaufdrehzahlanhebungssignal zu erzeugen und an ein Motorsteuergerät des Fahrzeugs zu übermitteln, wenn ein zeitlicher Mittelwert von negativen Batterieströmen $I_{battneg}$ über eine Zeitdauer $\Delta T_3$ einen Schwellenwert erreicht. Durch diese Maßnahme wird eine hohe Batteriezykisierung, das heißt ein häufiges Laden und Entladen der Fahrzeugbatterie wirksam verhindert und dadurch die Lebensdauer der Fahrzeugbatterie erhöht. Durch den stufenweisen Aufbau des erfindungsgemäßen Energiemanagements in einem Kraftfahrzeug wird somit erst in letzter Instanz die Leerlaufdrehzahl zur Sicherstellung eines ausreichenden Niveaus des Energienetzes erhöht und damit erst in diesem letzten Schritt die Erhöhung der Lebensdauer der Fahrzeugbatterie auf Kosten eines geringfügig höheren Treibstoffverbrauchs garantiert.

Bevorzugt ist die Leistungsstelleinheit oder die weitere Leistungsstelleinheit dazu ausgelegt, ein Leerlaufdrehzahlanhebungssignal zu erzeugen und an das Motorsteuergerät des Fahrzeugs zu übermitteln, wenn der zeitliche Mittelwert von negativen Batterieströmen $I_{battneg}$ über eine Zeitdauer $\Delta T_3$ nach Abschluß des mindestens einen Stellvorgangs des mindestens einen Verbrauchers durch das mindestens eine Steuersignal PP oder des mindestens einen weiteren Verbrauchers durch das mindestens eine Steuersignal NAS den Schwellenwert erreicht. Durch das Abwarten des Stellvorgangs werden Schwingungsneigungen wirkungsvoll unterdrückt und eine unnötige Leerlaufdrehzahlanhebung vermieden. Die Drehzahlanhebung erfolgt bevorzugt zweistufig und erfolgt bei einem schlechten Ladezustand der Batterie früher als bei aufgeladener Batterie. Dies berücksichtigt damit vorteilhafterweise die die Lebensdauer beeinflussenden Faktoren der Batterie. Bevorzugt ist deshalb das Mototsteuergerät dazu ausgelegt, die Drehzahl des Motors in Abhängigkeit des Leerlaufdrehzahlanhebungssignal zu steuern. Hierbei ist insbesondere auch daran zu denken, daß nach einer Entspannung der Energiesituation des Bordnetzes die Drehzahl auch wieder rechtzeitig abgesenkt wird.

Gemäß einem weiteren Aspekt wird die obige Aufgabe erfindungsgemäße auch gelöst durch ein Energiemanagementverfahren gemäß Anspruch 31 zum Energiemanagement in einem Fahrzeug, bei dem in einem ersten Schritt eine maximal abgebbare Leistung $P_{max}$ eines Generators des Fahrzeugs, eine tatsächlich abgegebenen Leistung $P_{gen}$ des Generators, ein Strom $I_{batt}$ zu einer Batterie des Fahrzeugs und eine Spannung $U_{batt}$ der Batterie erfaßt wird. Anschließend wird eine Leistungsreserve oder einer Überlast DP in einem Energienetz des Fahrzeugs, das mindestens die Batterie und den Generator umfaßt, aus den im ersten Schritt erfaßten Eingangsgrößen und einem vorbestimmten Wert für eine Generatorauslastungsbegrenzung K durch den Algorithmus gemäß Gleichung 1), siehe oben, berechnet. Bei der Festsetzung von D kann berücksichtigt werden, ob priorisierte Verbraucher ausgeschaltet sind. Das erfindungsgemäße Energiemanagementverfahren umfasst weiterhin den Schritt des Filterns der in Abhängigkeit der Zeit ermittelten Leistungsreserve oder Überlast DP, wobei die Filterung folgende Schritte umfasst: Aufsummieren jeweils nach einer vorbestimmten Zeitdauer $\Delta T_1$ der ermittelten Werte für die Leistungsreserve oder Überlast DP zu einem Summenwert DPI bis der Summenwert DPI einen oberen oder einen unteren Schwellenwert erreicht hat; Initiierten eines Resets mit einem neuen Startpunkt für die Zeitdauer $\Delta T_1$ und Gleich-0-Setzen des Summenwerts DPI, wenn der Summenwert DPI den oberen oder unteren Schwellenwert erreicht hat; Ermitteln einer Zeitdauer $\Delta T_2$ bis zum Erreichen des oberen und unteren Schwellenwerts; und Zuordnen zu der ermittelten Zeitdauer $\Delta T_2$ in Abhängigkeit davon, ob der obere oder der untere Schwellenwert erreicht wurde, eines Signals PSV, das die gefilterte Leistungsreserve oder Überlast codiert.

Bevorzugt wird die maximal abgebbare Leistung $P_{max}$ des Generators in mindestens zwei Teilschritten bestimmt, wobei zunächst eine Drehzahl n eines Motors des Fahrzeugs und eine für eine Temperatur des Generators signifikante Temperatur T erfaßt wird und anschließend die maximal abgebbare Leistung $P_{max}$ des Generators aus der Drehzahl n und der Temperatur T bestimmt wird.

Weitere vorteilhafte Ausführungsbeispiels können den Unteransprüchen entnommen werden.

Im folgenden werden Ausführungsbeispiele der Erfindung unter Hinweis auf die beigefügten Zeichnungen näher beschrieben. Es stellen dar:

Figur 1     in schematischer Darstellung eine erste Ausführungsform einer erfindungsgemäßen Energiemanagementvorrichtung;

Figur 2     in schematischer Darstellung eine zweite Ausführungsform ei- ner erfindungsgemäßen Energiemanagementvorrichtung;

Figur 3     eine detailliertere schematische Darstellung einer Prädiktorein- heit gemäß der Ausführungsform von Figur 2;

Figur 4     ein schematisches Diagramm, aus dem die Abhängigkeit der Leistungsreserve oder Überlast DP von der Batteriespannung $U_{batt}$ hervorgeht;

Figur 5     eine schematische Darstellung der Filtereinheit gemäß dem Ausführungsbeispiel von Figur 2;

Figur 6     beispielhaft den zeitlichen Verlauf und damit die Abhängigkeit der Größen DP, DPI, PS und PSV voneinander; und

Figur 7     den zeitlichen Verlauf diverser Größen für ein weiteres Ausfüh- rungsbeispiel der Erfindung.

Im folgenden werden für gleiche und gleichwirkende Elemente der verschieden Ausführungsbeispiele durchweg gleiche Bezugszeichen verwendet.

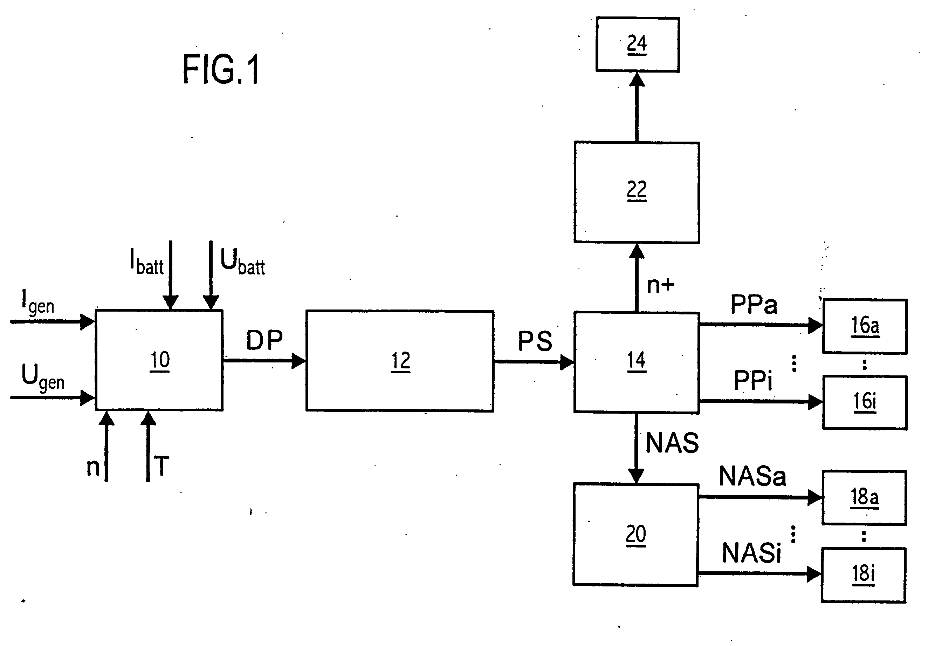

Figur 1 zeigt in schematischer Darstellung den Aufbau eines ersten Ausführungsbeispiels einer erfindungsgemäßen Energiemanagementvorrichtung. Sie umfaßt eine Prädiktoreinheit 10, der als Eingangsgrößen die Drehzahl n des Verbrennungsmotors, eine mit dem Generator korrelierte Temperatur T, beispielsweise die Kühlwassertemperatur, die vom Generator gelieferte Spannung $U_{gen}$, der vom Generator gelieferte Strom $I_{gen}$, der zur Batterie fließende Strom $I_{batt}$ sowie die Batteriespannung $U_{batt}$ zugeführt werden. Gemäß der Gleichung

$$DP = (P_{max} - P_{gen}) + (I_{batt} * U_{batt}) * D \qquad\qquad 2)$$

wird ein Wert für die Leistungsreserve oder Überlast DP berechnet, wobei $P_{max}$ eine Funktion der Drehzahl n und der Temperatur T ist, $P_{gen}$ der tatsächlich vom Generator abgegebenen Leistung entspricht und aus dem Produkt $I_{gen} * U_{gen}$ ermittelt wird und der Term D = 0 gesetzt wird, wenn $I_{batt} > 0$ ist.

Der erste Term entspricht der Leistungsreserve des Generators, während der zweite Term, sofern er ungleich 0 ist, darauf hinweist, daß bereits Energie aus der Fahrzeugbatterie entnommen wird. Sofern der Wert DP > 0 ist, ergibt sich also eine Leistungsreserve in dem Energienetz des Fahrzeugs, während bei DP < 0 das Energienetz bereits im Überlastbereich betrieben wird.

Das Signal DP, das also entweder eine Leistungsreserve oder eine Überlast ausdrückt, wird an einen Filter 12 geleitet, der ausgelegt ist, Schwingungen zu unterdrücken. Hierzu erzeugt er aus dem Signal DP ein Signal PS. Das Signal PS wird einer Leistungsstelleinheit 14 zugeführt, die je nach dem, ob das Signal PS eine Leistungsreserve oder eine Überlast zum Ausdruck bringt, einen Verbraucher 16a, 16i einschaltet oder ausschaltet oder auf eine höhere Leistungsstufe schaltet oder auf eine niedrigere Leistungsstufe schaltet. Andere Verbraucher 18a, 18i werden über eine andere Leistungsstelleinheit 20 gesteuert. Für den Fall, daß trotz weitestgehender Abschaltung der Verbraucher 16a, 16i sich das Energienetz noch immer im Überlastbereich befindet, liefert die Leistungsstelleinheit 14 an die Leistungsstelleinheit 20 ein Notabschaltsignal NAS, worauf die Leistungsstelleinheit 20 gegebenenfalls unter Berücksichtigung deren Priorität Notabschaltsignale NASa, NASi an eine Auswahl der Verbraucher oder alle Verbraucher 18a, 18i sendet.

Sofern dies immer noch nicht ausreicht, um das Energienetz aus dem Überlastbereich zu bringen, oder alternativ zu der letztgenannten Maßnahme (Notabschaltsignal) liefert die Leistungstelleinheit 14 ein Leerlaufdrehzahlanhebungssignal n+ an ein Motorsteuergerät 22, welches daraufhin den Motor 24 derart ansteuert, daß dessen Leerlaufdrehzahl steigt. Nach dem das Energienetz durch die jeweilige Maßnahme in einen Zustand versetzt wurde, der eine Leistungsreserve beinhaltet, werden, gegebenenfalls nach einem vorgegebenen Zeitraum oder einer vorgegebenen Vorschrift, die Drehzahl wieder abgesenkt, die Notausschaltsignale zurückgenommen bzw. die Signale PPa, PPi nunmehr zum Einschalten der Verbraucher 16a bis 16i oder um diese auf eine höhere Leistungsstufe zu schalten kreiert.

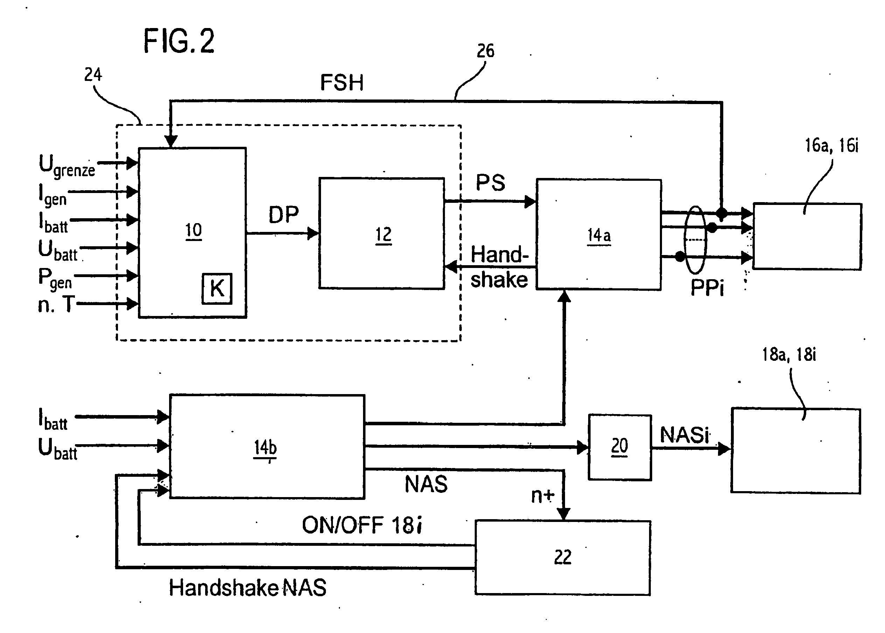

Figur 2 zeigt in schematischer Darstellung den Aufbau eines zweiten Ausführungsbeispiels einer erfindungsgemäßen Energiemanagementvorrichtung. Prädiktoreinheit 10 und Filter 12 sind zu einem Block 24 zusammengefaßt und erhalten als Eingangssignal die Drehzahl n, Temperatur T, die aktuelle Generatorleistung $P_{gen}$, die Batteriespannung $U_{batt}$, den Batteriestrom $I_{batt}$, den Generatorstrom $I_{gen}$ sowie eine Grenzspannung $U_{grenze}$. Letztere, wie durch den Pfeil 26 gekennzeichnet, kann abhängig sein vom Einschaltzustand eines oder mehrerer Verbraucher, beispielsweise der Frontscheibenheizung FSH. Insbesondere kann $U_{grenze}$ für den Fall, daß vorliegend die Frontscheibenheizung eingeschaltet ist, niedriger angesetzt werden als für den Fall, daß die Frontscheibenheizung ausgeschaltet ist. Im Prädiktor ist weiterhin ein Wert K abgelegt, der einer Generatorauslastungsbegrenzung entspricht, das heißt einer Sicherheitsreserve für den Generator. K liegt vorzugsweise im Bereich zwischen 0 W und 250 W.

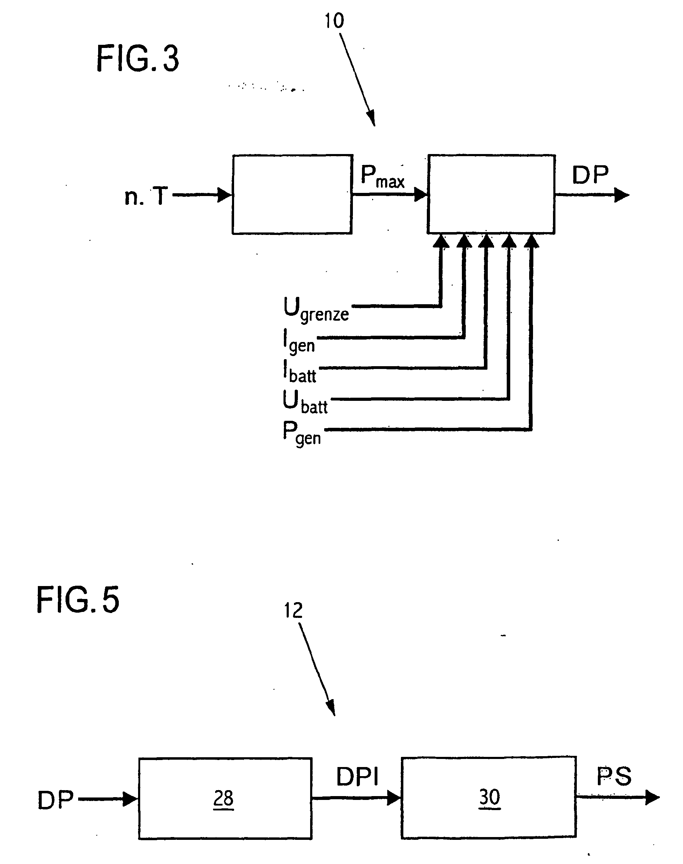

Figur 3 zeigt den zweistufigen Aufbau der Prädiktoreinheit 10, wonach zunächst aus der Drehzahl n und der Temperatur T die maximale Leistung berechnet wird und diese neben den anderen bereits genannten Größen zur Erzeugung eines Signals DP verarbeitet wird. Das Signal DP wird ermittelt nach folgender Gleichung:

$$DP = (P_{max} - P_{gen} - K) + (I_{batt} * U_{batt}) * D - A + (U_{batt} - U_{grenze}) * \qquad 3)$$
$$B (I_{gen} - I_{batt}).$$

In dieser Gleichung wird D = 0 gesetzt, wenn $I_{batt} > 0$ ist, der Term - A stellt einen Sicherheitsterm für Unterspannung bereit, wobei diese nur dann angesetzt wird, wenn $U_{batt} < U_{min}$ ist, wobei $U_{min}$ einer vorgebbaren Untergrenze der Batteriespannung entspricht, bei einem 12 V Netz beispielsweise 12 V. Der Term + $(U_{batt} - U_{grenze}) * B (I_{gen} - I_{batt})$ erfaßt die Leistungsdifferenz durch einen Spannungseinbruch, das heißt die Leistungsreserve, die vom Netz geleistet werden kann, ohne daß die Batteriespannung unter eine vorgebbare Grenzspannung $U_{grenze}$ absinkt. Der Wert B entspricht einem Korrekturfaktor, der vorzugsweise zwischen 0,5 und 2 liegt. Der Term $(I_{gen} - I_{batt})$ stellt den Bordnetzstrom dar, der nicht in die Batterie fließt, das heißt nicht zu Ladezwecken der Batterie dient und dait, zur Bestimmung dieses Leistungsreserveanteils mit der erwähnten Spannungsdifferenz zu multiplizieren ist.

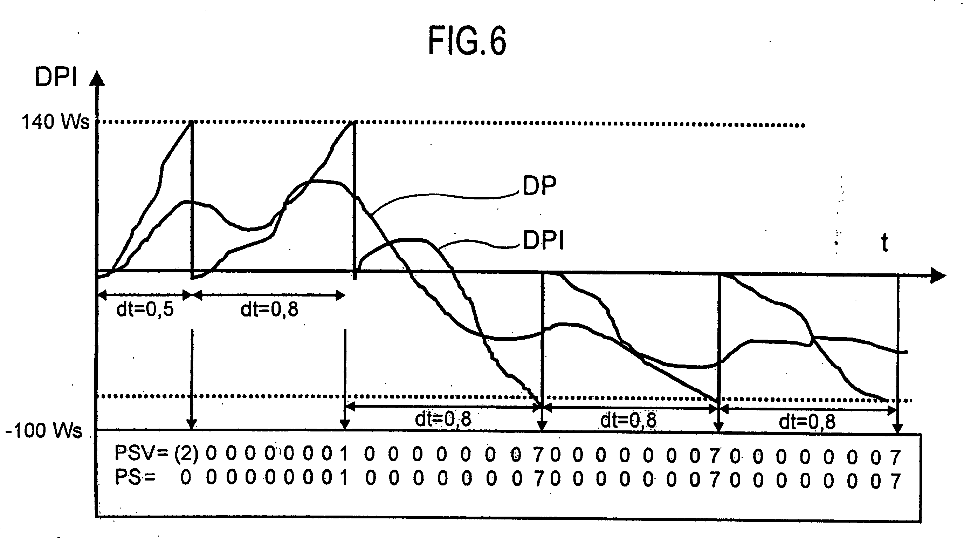

Der Filter 12 ist detaillierter dargestellt in Figur 5, wonach zunächst aus dem Signal DP in einem Integrator 28 das Signal DPI erzeugt wird, aus dem anschließend über eine Kontrolleinheit 30 zur Schwingungsunterdrückung das Signal PS erzeugt wird. Detailliertere Betrachtungen hierzu werden im Zusammenhang mit Figur 6 durchgeführt werden.

Zurück zu Figur 2: Das Signal PS des Blocks 24 wird einer zweigeteilten Leistungsstelleinheit 14a, 14b zugeführt. Vorliegend dient der Block 14a dazu, Signale PPa, PPi an die Verbraucher 16a, 16i zu senden, um auf eine Überlast oder Leistungsreserve zu reagieren. Nach erfolgter Stellaktion liefert der Block 14a ein Handshake-Singal an den Block 24, um den Block 24 über den erfolgten Stellvorgang zu informieren und einen Reset zu erzeugen, um in Anbetracht des erfolgten Stellvorgangs eine Neuermittlung des Signals PS zu initiieren. Hierdurch werden Schwingungsneigungen wirksam unterdrückt. Der Block 14 b ist mit dem Motorsteuergerät 22 verbunden, das seinerseits Informationen an den Block 14b liefert, über die Ausführung einer erfolgen Notabschaltung durch das Signal Handshake NAS sowie über den Ein- und Ausschaltzustand der Verbraucher 18a, 18i durch das Signal On/Off 18i. Zu den Verbrauchern 16i, 18i kann hier auch der Generator oder ein Generator des Fahrzeugs zu zählen sein, da bei bestimmten Betriebssituationen unter Umständen die vom Generator am Verbrennungsmotor hervorgerufene Last zu hoch sein kann und damit es vorteilhaft sein kann, die Energieerzeugung dieses Generators zu drosseln oder ganz abzuschalten. Sollten diese Maßnahmen noch nicht zu einer Erholung des Energieniveaus des Bordnetzes geführt haben, ist der Block 14b dazu ausgelegt, gegebenenfalls nach der Durchführung von Notabschaltungen, siehe unten in Zusammenhang mit Block 14b, ein Signal n+ an das Motorsteuergerät 22 zu senden, um eine Erhöhung der Leerlaufdrehzahl des Verbrennungsmotors zu bewirken. Der Block 14b erhält seinerseits als Eingangssignale den Batteriestrom $I_{batt}$ und die Batteriespannung $U_{batt}$ und kann daher feststellen, ob die von Block 14a ausgeführten Maßnahmen bei einer Überlastsituation zu einer Erholung des Systems geführt haben. Sollte dies nicht geglückt sein, sendet der Block 14b ein Notabschaltsignal NAS an eine weitere Steuereinheit 20, die ihrerseits Notabschaltsignale NASa, NASi an Verbraucher 18a, 18i sendet.

Bevorzugt ist die Verbrauchernotabschaltung und die Leerlaufdrehzahlanhebung so dimensioniert, daß diese bei Außentemperaturen von weniger als 5 °C nicht aktiv wird, das heißt, daß ein ausreichendes Energieniveau des Bordnetzes aufrechtzuerhalten ist, allein durch Steuerung der Verbraucher 16a, 16i durch die Leistungsstelleinheit 14, 14a. Zu Verbrauchernotabschaltungen und Leerlaufdrehzahlanhebungen soll es bevorzugt nur kommen bei Stadt-, Stau- und Bergfahrten bei hohen Außentemperaturen, insbesondere bei Temperatur größer als 30 °C.

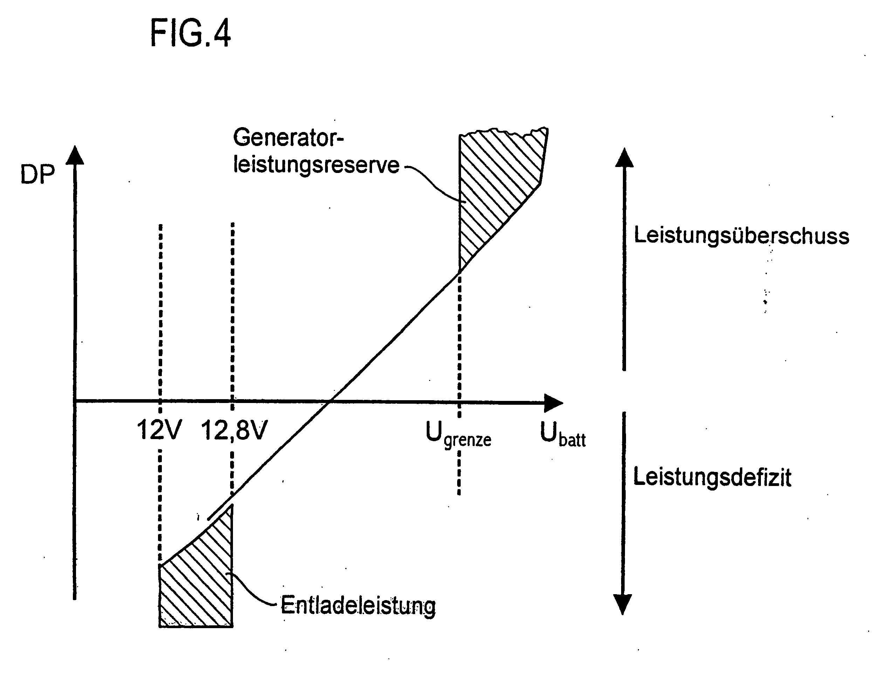

Figur 4 zeigt den Verlauf des Signals DP über der Batteriespannung $U_{batt}$ am Beispiel eines 12 V Bordnetzes. Selbstverständlich ist die vorliegende Erfindung auch für Fahrzeuge mit mehreren Spannungen und mehreren Generatoren einsetzbar, beispielsweise für ein Zweibatteriennetz mit 12 V und 36 V Spannung. Die in Figur 4 dargestellte Abhängigkeit geht von einem linearen Verbraucherverhalten aus. Erfindungsgemäß kann auch nichtlineares Verbraucherverhalten angenommen werden, wobei dies zu einem geänderten Kurvenzug führen würde. In diesem Beispiel ergibt sich eine Generatorleistungsreserve, sobald die Batteriespannung $U_{batt}$ die Spannung $U_{grenze}$ überschreitet. Sinkt hingegen die Batteriespannung $U_{batt}$ unter einen vorgebbaren Grenzwert, hier 12,8 V ab, wird die Batterie entladen, was sich in einer negativen Leistungsbilanz für das Signal DP widerspiegelt.

Zurückkommend auf Figur 5 wird zunächst im Integrator 28 das Signal DP alle 100 ms aufsummiert. Figur 6 zeigt den zugehörigen Verlauf des Signals DP sowie des aufsummierten Signals DPI. Sobald das Signal DPI einen oberen Schwellwert, vorliegend 140 Ws, oder einen unteren Schwellwert, vorliegend -100 Ws erreicht, erfolgt ein Reset des DPI-Signals und damit ein Rücksetzen des Integrators 28. Aus der seit dem letzten Reset vergangenen Zeitdauer dt bis zum Erreichen des oberen oder unteren Schwellwerts wird gemäß Tabelle 1 der zugehörige PSV-Wert ermittelt:

Tabelle 1

| Wert von dt | Summenwert= +140 Ws | Summenwert= -100 Ws |
| --- | --- | --- |
| 0,7 ≤ dt < 2,0 | 1 | 7 |
| 0,4 ≤ dt < 0,7 | 2 | 6 |
| dt < 0,4 | 3 | 5 |

Für eine hinreichend schnelle Regelung im Überlastfall kann ein PSV-Wert von 7 durch folgende weitere Bedingungen erreicht werden:

- einzelner DP-Wert unter - 40;
- DP-Wert von < -30 bei DPI-Wert unter -30;
- DP-Wert von < -28 bei DPI-Wert unter -40; und
- DP-Wert von < -20 bei DPI-Wert unter -50.

Ein Vorzeichenwechsel im DP-Signal bewirkt ebenfalls einen Reset des Filters, das heißt das DPI-Signal erhält den Wert 0 und der Zeitraum dt bis zum Erreichen eines Schwellwerts wird von diesem Zeitpunkt an gezählt.

Im vorliegenden Beispiel entstehen damit folgende Schaltzeiten im Filter bei Abregelung:

| 51 W-Abweichung | 2,0 s |
| --- | --- |
| 150 W-Abweichung | 0,7 s |
| 301 W-Abweichung | 0,2 s |
| 500 W-Abweichung | 0,1 s |

Die Ausgabe des PSV-Signals erfolgt jeweils als Impuls, wenn das DPI-Signal einen Grenzwert erreicht. Der Impuls des Signals PSV wird für einen Takt gesetzt, siehe Figur 6, und danach wieder auf 0 gesetzt.

Die Kontrolleinheit 30 zur Schwingungsunterdrückung erzeugt aus dem Signal PSV ein Signal PS und zwar nach folgender Vorschrift: die ersten zwei Werte des PSV-Signals nach einer Überlastphase werden immer ignoriert und im Signal PS zu 0 gesetzt. Alle anderen Werte werden unverändert weitergegeben. Beispielsweise wird in Figur 6 der PSV-Wert von 2, siehe ganz links, unterdrückt, unter der Annahme es handelt sich um den zweiten Lastreserverwert nach einer Überlastphase. Die folgenden Werte des PSV-Signals bis zur nächsten Erholung nach einer Überlastphase werden unverändert in das Signal PS umgesetzt. Dies führt zu einer verzögerten Hochregelung der Systeme, während die Geschwindigkeit der Abregelung hierdurch nicht beeinflußt wird. Nachdem im PS-Signal ein Wert ungleich 0 gesendet worden ist, stellt die Leistungstelleinheit 14, 14a die neuen Betriebsparameter der Verbraucher 16a, 16i ein. Das Signal DPI wird so lange bei 0 gehalten, bis die Leistungsstelleinheit 14, 14a über einen Handshake anzeigt, daß die Leistungsänderung umgesetzt worden ist.

Unter der Annahme von 100 W Schaltstufen kann das Signal PS die in Tabelle 2 dargestellten Werte annehmen:

Tabelle 2

| Wert PS | Bedeutung |
|---|---|
| 0 | Keine Änderung |
| 1 | Ca. 50 - 150 Watt Reserve |
| 2 | Ca. 150 - 250 Watt Reserve |
| 3 | Ca. 250 - 350 Watt Reserve |
| 4 | Undef. bzw. 350 - 450 Überlast (optional) |
| 5 | Ca. 250 - 350 Watt Überlast |
| 6 | Ca. 150 - 250 Watt Überlast |
| 7 | Ca. 50 - 150 Watt Überlast |

In einem bevorzugten Ausführungsbeispiel ist die Leistungsstelleinheit 14, 14a durch ein Klimabedienteil realisiert, das Heizsysteme 16a, 16i im Hinblick auf das Signal PS wie in Tabelle 3 ansteuert:

Tabelle 3

| Verbraucher | Stufe | Regelung | Leistungsdifferenz |
|---|---|---|---|
| Sitzheizung | 1 | Diskret | 100 W |
| | 2 | Diskret | 1 00 W |
| Heckscheibenheizung | 3 | Diskret | 100 W |
| | 4 | Diskret | 100 W |
| | 5 | Diskret | 100 W |
| Frontscheibenhzg. 0-50% | 6 | Kont. | 100 W |
| | 7 | Kont. | 100 W |
| | 8 | Kont. | 100 W |
| | 9 | Kont. | 100 W |
| | 10 | Kont. | 100 W |
| PTC-Heizung 0-50% | 11 | Kont. | 100 W |
| | 12 | Kont. | 100 W |
| | 13 | Kont. | 100 W |
| Frontscheibenhzg. 0-50% | 14 | Kont. | 100 W |
| | 15 | Kont. | 100 W |
| | 16 | Kont. | 100 W |
| | 17 | Kont. | 100 W |
| | 18 | Kont. | 100 W |
| PTC-Heizung 50-100% | 19 | Kont. | 100 W |
| | 20 | Kont. | 100 W |
| | 21 | Kont. | 100 W |

Diskret zu regelnde Verbraucher dürfen hierbei nur zu- oder abgeregelt werden, wenn eine genügend hohe Leistungsdifferenz besteht.

Die nachfolgende Tabelle 4 zeigt am Beispiel von 4 Verbrauchern deren Priorität, deren Regelungsart sowie die Leistungsdifferenz zwischen Minimum und Maximum bzw. zwischen zwei Leistungsstufen.

Tabelle 4

| Verbraucher | Priorität | Regelung | Leistungsdifferenz |
|---|---|---|---|
| Sitzheizung | 1 | Diskret | 200 W |
| Heckscheibenheizung | 2 | Diskret | 300 W |
| Frontscheibenheizung | 3 | Kont. | 1000 W |
| PTC-Heizung | 4 | Kont. | 600 W |

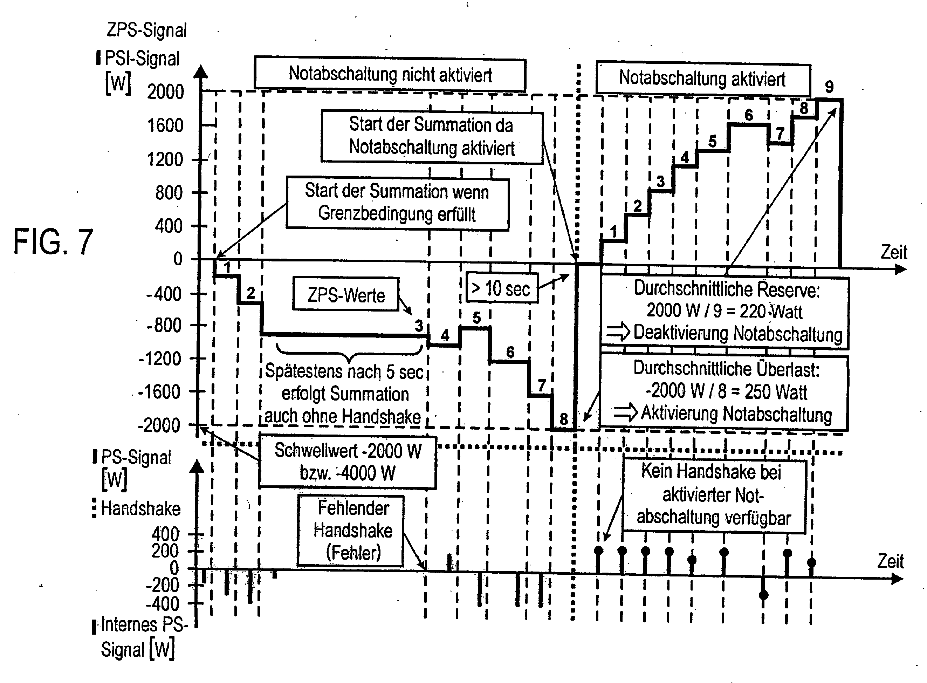

Mit Bezug auf Figur 7 soll auf einen besonders bevorzugten Algorithmus zur Steuerung der Verbrauchernotabschaltung eingegangen werden. Ziel der Verbrauchernotabschaltung ist es, weitere Systeme, insbesondere Heizsysteme abzuschalten, falls die Regelung der Verbraucher 16a, 16i durch die Leistungsstelleinheit 14a, 14 alleine nicht mehr ausreicht, um eine stabile Energieversorgung sicherzustellen.

Figur 7 zeigt den zeitlichen Verlauf des PS-Signals, siehe unteres Diagramm, sowie den Verlauf eines Signals PSI, das einer Summation des PS-Signals entspricht, im oberen Diagramm. In der jeweils linken Hälfte der Diagramme ist die Notabschaltung nicht aktiviert, in der rechten Hälfte ist sie aktiviert.

Zunächst sei auf den Fall eingegangen, daß die Notabschaltung inaktiv ist: Die Summation des Signals PS zur Erzeugung des Signals PSI und die zugehörige Bedingung zur Aktivierung der Notabschaltung sind wie folgt:

1. Die Summation des PS-Signals zur Erzeugung des Signals PSI wird gestartet, wenn die Notabschaltung inaktiv ist und die Summe der Ströme ausgewählter Verbraucher kleiner gleich einem vorgebbaren Schwellwert ist.

Die Notabschaltung wird dann aktiviert, wenn das Signal PSI den unteren Schwellwert erreicht bzw. unterschreitet und die Integrationsdauer des Signals PSI mehr als eine vorgebbare Zeitdauer gedauert hat und eine Bedienperson des Fahrzeugs einen weiteren Verbraucher aktivieren möchte und der Mittelwert PSIM, der dem Quotienten aus dem unteren Schwellwert durch die Anzahl der PS-Signale ungleich Null seit Start der Summation entspricht, kleiner gleich eine erste vorgebbare Schwelle wird.

Die Notabschaltung wird weiterhin aktiviert, wenn, wie im soeben genannten Fall, das Signal PSI den unteren Schwellwert erreicht bzw. unterschreitet und die Integrationsdauer des Signals PSI mehr als eine vorgebbare Zeitdauer gedauert hat, die Bedienperson einen Verbraucher ausschalten möchte und der Mittelwert PSIM eine zweite vorgebbare Schwelle erreicht, die größer ist als die erste Schwelle

Beispiel: Schwelle für Summe der Ströme: 42 A; unterer Schwellwert für PSI-Signal: -2000W; Schwelle für Integrationsdauer: 10 s; erste Schwelle für Mittelwert PSIM: -250 W; zweite Schwelle für PSIM: -150 W.

2. Die Summation des Signals PS zur Erzeugung des Signals PSI wird weiterhin gestartet, wenn die Notabschaltung inaktiv ist, und die Summe der Ströme ausgewählter Verbraucher größer als ein vorgebbarer Schwellwert ist.

Dabei wird die Notabschaltung aktiviert, wenn das Signal PSI einen vorgebbaren Schwellwert unterschreitet und die Integrationsdauer PSI mehr als eine vorgebbare Zeitdauer beträgt und die, Bedienperson des Fahrzeugs einen weiteren Verbraucher anschalten möchte und der Mittelwert PSIM eine dritte vorgebbare Schwelle erreicht und der letzte PS-Wert weniger als einen vorgebbaren Wert betrug.

Die Notabschaltung wird weiterhin aktiviert, wenn das Signal PSI den vorgebbaren Schwellwert unterschreitet, die Integrationsdauer PSI größer als der vorgebbare Schwellwert ist, die Bedienperson einen weiteren Verbraucher ausschalten möchte und der Mittelwert PSIM eine vierte vorgebbare Schwelle erreicht und der letzte PS-Wert weniger als einen vorgebbarer Wert betrug.

Beispiel: Schwelle für Summe der Ströme: 42 A; unterer Schwellwert für PSI-Signal: -2000W; Schwelle für Integrationsdauer: 10 s; dritte Schwelle für Mittelwert PSIM: -200 W; vierte Schwelle für PSIM: -150 W, Schwelle für letzten PS-Wert: 200W.

Für den Fall, daß die Notabschaltung aktiv ist, gilt folgendes:

Solange die Notabschaltung aktiv ist, beträgt der Wert des von der Leistungsstelleinheit 14, 14a gesendeten PS-Signals 0 (IDLE). Diese Maßnahme stellt sicher, daß nicht schon wieder Verbraucher eingeschaltet oder in ihrer Leistungsstufe höher geschaltet werden, obwohl die Notabschaltung noch aktiv ist. Intern wird jedoch das PS-Signal weiter berechnet und sobald eine Grenzbedingung erfüllt ist, siehe oben, wird mit einer Summation der von 0 W verschiedenen internen PS-Signale begonnen, um das Signal PSI zu bilden, unabhängig vom Handshake der Leistungsstelleinheit 14, 14a. Ein Botschaftszähler ZPS dient zur Erfassung der Anzahl der aufsummierten Werte.

Überschreitet das PSI-Signal einen Schwellwert und ist seit dem Start der Integration mindestens eine vorgebbare Zeitdauer, beispielsweise 10 Sekunden, vergangen, so wird der Mittelwert PSIM gebildet (PSIM = PSI/ZPS). Anhand PSIM wird entschieden, ob die Verbrauchernotabschaltung deaktiviert wird.

Die Grenzbedingung zum Start der Summation PSI und die Entscheidungsbedingung zur Deaktivierung der Notabschaltung ist wie folgt:

Die Summation PSI wird gestartet, wenn die Notabschaltung aktiv ist und die Leerlaufdrehzahlanhebung inaktiv ist. Wird während der Berechnung des Signals PSI die Leerlaufdrehzahlanhebung aktiviert, so wird die Berechnung sofort unterbrochen und die Notabschaltung bleibt aktiv.

Die Notabschaltung wird deaktiviert, wenn das Signal PSI den oberen Schwellwert erreicht oder überschreitet und die Integrationsdauer PSI länger war als ein vorgebbarer Schwellwert und PSIM einen fünften vorgebbaren Schwellewert erreicht.

Beispiel: oberer Schwellwert für PSI-Signal: 2000W; Schwelle für Integrationsdauer: 10 s; fünfte Schwelle für Mittelwert PSIM: +170 W.

In Figur 7, unteres Diagramm, sollen die oben angegebenen Beispielwerte gelten. Es wird zunächst ein PS-Signal von - 200 W erzeugt. Es wird angenommen, daß eine der Grenzbedingungen erfüllt ist und deshalb nach dem Handshake (senkrechte Linie) eine Summation, siehe oberes Diagramm, zur Erzeugung des Signal PSI beginnt. Die Anzahl der in die Summation eingegangenen PS-Signalwerte wird als ZPS-Wert mitgezählt. Nach dem fehlenden Handshake auf das vierte PS-Signal ungleich null hin erfolgt eine Summation nach spätestens 5 Sekunden auch ohne Handshake. Positive Werte des PS-Signals führen selbstverständlich zu einer Erhöhung des PSI-Signals, während negative Werte zu einer Verringerung desselben führen. Im vorliegenden Beispiel wurde nach acht PS-Signalen ungleich Null seit Beginn des Aufsummierens der untere Schwellwert erreicht. Die durchschnittliche Überlast beträgt daher - 2000 W (der untere Schwellwert) dividiert durch 8 (der Zahl der Sprünge im PSI-Signal bis zu diesem Zeitpunkt), also - 250 W, was vorliegend zur Aktivierung der Notabschaltung führt. Die Summation des PSI-Signals startet nach Aktivierung der Notabschaltung bei Null. Wie bereits erwähnt, ist bei aktivierter Notabschaltung im vorliegenden Ausführungsbeispiel kein Handshake verfügbar, so daß ein sogenanntes internes PS-Signal zum Erzeugen des PSI-Signals aufsummiert wird. Vorliegend wird der obere Schwellwert im PSI-Signal nach neun Sprüngen des PSI-Signals erreicht, wodurch sich eine durchschnittliche Reserve zu 2000 W (oberer Schwellwert) dividiert durch 9 (Anzahl der Sprünge bis zum Erreichen des oberen Schwellwerts) also 220 W ergibt, was zu einer Deaktivierung der Notabschaltung führt.

Eine zweistufige Leerlaufdrehzahlanhebung erfolgt, wenn die Verbrauchernotabschaltung aktiviert ist und die Batteriezyklisierung einen Schwellwert überschreitet. Eine Leerlaufdrehzahlanhebung auf eine erste Stufe erfolgt, wenn der Mittelwert des Integrals der negativen Batterieströme der letzten zwei Minuten weniger als eine erste Schwelle, beispielsweise -5 A, beträgt. Eine Leerlaufdrehzahlanhebung auf die zweite Stufe erfolgt, wenn dieser Mittelwert weniger als eine zweite Schwelle, beispielsweise -15 A, beträgt.

Nach erfolgter Leerlaufdrehzahlanhebung wird die Berechnung des Mittelwerts auf Null gesetzt und erneut gestartet.

Das Rücksetzen der Leerlaufdrehzahlanhebung erfolgt ebenfalls schrittweise in der umgekehrten Reihenfolge.

Die Aktivierung der Leerlaufdrehzahlanhebung kann von einer prädizierten Startspannung, das heißt der Spannung abhängig gemacht werden, die bei einem Batteriestart zur Verfügung stehen würde, wenn ein Start des Verbrennungsmotors durchgeführt werden müßte.

Eine Verbrauchernotabschaltung kann separat auch dann vorgenommen werden, wenn die gemessene Spannung über ein definiertes Zeitintervall einen vorgebbaren Schwellwert unterschreitet. Hierbei wird die gemessene Batteriespannung bevorzugt mit einer geeigneten Grenzfrequenz kleiner als 10 Hz gefiltert.

Die folgende Tabelle 5 gibt die erforderliche Unterspannungsdauer für das Auslösen der Verbrauchernotabschaltung in Abhängigkeit des Unterspannungswertes wieder:

Tabelle 5

|  | Batteriespannung | Zeitdauer der Unterspannung |
|---|---|---|
| Unterspannung | ≤ 10 V | > 10 V; ≤ 11,5 V |
| Unterspannungsdauer | ≥ 0,3 sec | ≥ 1 sec |

**Patentansprüche**

1. Energiemanagementvorrichtung zum Energiemanagement in einem Fahrzeug mit einer Prädiktoreinheit (10) zur Bestimmung einer Leistungsreserve oder einer Überlast DP in einem Energienetz des Fahrzeugs, wobei das Energienetz mindestens eine Batterie und einen Generator des Fahrzeugs umfaßt, wobei die Prädiktoreinheit (10) dazu ausgelegt ist, mindestens folgende Eingangsgrößen zu erfassen:

   - eine maximal abgebbare Leistung $P_{max}$ des Generators,
   - eine tatsächlich abgegebene Leistung $P_{gen}$ des Generators,
   - einen Strom $I_{batt}$ zur Batterie und
   - eine Spannung $U_{batt}$ der Batterie,

   wobei die Prädiktoreinheit (10) weiterhin dazu ausgelegt ist, die Leistungsreserve oder Überlast DP aus diesen Eingangsgrößen und einem vorbestimmten Wert für eine Generatorauslastungsbegrenzung K durch den Algorithmus

$$DP = (P_{max} - P_{gen} - K) + (I_{batt} * U_{batt}) * D + X$$

   zu berechnen, wobei der Term D gleich 0 gesetzt wird, wenn $I_{batt} > 0$ ist, und wobei der Term X gleich 0 oder ungleich 0 ist,
   wobei die Energiemanagementvorrichtung weiterhin einen Filter (12) zur Filterung der in Abhängigkeit der Zeit ermittelten Leistungsreserve oder Überlast DP umfaßt,
   wobei der Filter (12) eine Integratoreinheit (28) umfaßt, die dazu ausgelegt ist,

   - jeweils nach einer vorbestimmten Zeitdauer $\Delta T_1$ ermittelte Werte für die Leistungsreserve oder Überlast DP zu einem Summenwert DPI aufzusummieren, bis der Summenwert DPI einen oberen oder einen unteren Schwellenwert erreicht hat,
   - einen Reset mit einem neuen Startpunkt für die Zeitdauer $\Delta T_1$ zu initiieren und den Summenwert DPI gleich 0 zu setzen, wenn der Summenwert DPI den oberen oder unteren Schwellenwert erreicht hat,
   - eine Zeitdauer $\Delta T_2$ bis zum Erreichen des oberen oder unteren Schwellenwerts zu ermitteln und
   - der ermittelten Zeitdauer $\Delta T_2$ in Abhängigkeit davon, ob der obere oder der untere Schwellenwert erreicht wurde, ein Signal PSV, das die gefilterte Leistungsreserve oder Überlast codiert, zuzuordnen.

2. Energiemanagementvorrichtung nach Anspruch 1,
   **dadurch gekennzeichnet,**
   **daß** K in einem Bereich zwischen 0 W und 250 W liegt, insbesondere 50 W oder 150 W beträgt.

3. Energiemanagementvorrichtung nach einem der vorhergehenden Ansprüche,
   **dadurch gekennzeichnet,**
   **daß** der Term X einen Korrekturterm
   -A
   umfaßt, wenn $U_{batt} < U_{min}$ ist, wobei $U_{min}$ insbesondere 12 V oder 36 V beträgt, wobei A insbesondere 400 W beträgt.

4. Energiemanagementvorrichtung nach einem der vorhergehenden Ansprüche,
   **dadurch gekennzeichnet,**
   **daß** die Prädiktoreinheit (10) dazu ausgelegt ist, als weitere Eingangsgröße einen Strom $I_{gen}$ vom Generator weg zu erfassen, wobei die Prädiktoreinheit (10) weiterhin dazu ausgelegt ist, die Leistungsreserve oder Überlast DP neben den Eingangsgrößen und dem vorbestimmten Wert für die Generatorauslastungsbegrenzung K aus der weiteren Eingangsgröße und einem vorbestimmten unteren Grenzwert für die Batterie- oder Energienetzspannung $U_{grenze}$ durch den Algorithmus zu berechnen, wobei der Term X einen Term

$$+ (U_{batt} - U_{grenze}) * B * (I_{gen} - I_{batt})$$

umfaßt, der spezifisch für eine Leistungsdifferenz aufgrund eines Spannungseinbruchs durch mindestens einen Verbraucher (16a, 16i, 18a, 18i) ist, wobei B einen Korrekturfaktor darstellt, der insbesondere im Bereich zwischen 0,5 und 2 liegt und $U_{batt}$ für die Spannung der Batterie oder die Spannung des Energienetzes steht.

5.  Energiemanagementvorrichtung nach Anspruch 4,
    **dadurch gekennzeichnet,**
    **daß** $U_{grenze}$ im wesentlichen 12.8 V beträgt.

6.  Energiemanagementvorrichtung nach einem der vorhergehenden Ansprüche,
    **dadurch gekennzeichnet,**
    **daß** in der Prädiktoreinheit (10) ein Generatormodell abgelegt ist, mit Hilfe dessen aus einer Drehzahl n eines Motors des Fahrzeugs und einer für eine Temperatur des Generators signifikanten Temperatur T die maximal abgebbare Leistung $P_{max}$ des Generators bestimmbar ist.

7.  Energiemanagementvorrichtung nach Anspruch 6,
    **dadurch gekennzeichnet,**
    **daß** die Temperatur T eine Kühlwassertemperatur ist.

8.  Energiemanagementvorrichtung nach einem der vorhergehenden Ansprüche,
    **dadurch gekennzeichnet,**
    **daß** die Energiemanagementvorrichtung mindestens ein Meßelement aufweist, das zur Ermittlung mindestens einer der Eingangsgrößen und/oder der Drehzahl n und/oder der Temperatur T und/oder der weiteren Eingangsgröße ausgebildet ist, wobei das mindestens eine Meßelement zur Übermittlung der mindestens einen Eingangsgröße und/oder der Drehzahl n und/oder der Temperatur T und/oder der weiteren Eingangsgröße mit der Prädiktoreinheit (10) verbunden ist.

9.  Energiemanagementvorrichtung nach Anspruch 8,
    **dadurch gekennzeichnet,**
    **daß** das mindestens eine Meßelement dazu ausgebildet ist, die mindestens eine Eingangsgröße und/oder die Drehzahl n und/oder die Temperatur T und/oder die weitere Eingangsgröße mit jeweils einer ersten Rate zu ermitteln und/oder mit jeweils einer zweiten Rate an die Prädiktoreinheit (10) zu übermitteln.

10. Energiemanagementvorrichtung nach Anspruch 9,
    **dadurch gekennzeichnet,**
    **daß** die erste Rate der zweiten Rate entspricht.

11. Energiemanagementvorrichtung nach einem der Ansprüche 9 oder 10, **dadurch gekennzeichnet,**
    **daß** die erste und/oder die zweite Rate im Bereich von $1/1000 \text{ ms}^{-1}$ bis $1/10 \text{ ms}^{-1}$ liegt, insbesondere im wesentlichen $1/100 \text{ ms}^{-1}$ beträgt.

12. Energiemanagementvorrichtung nach einem der vorhergehenden Ansprüche,
    **dadurch gekennzeichnet,**
    **daß** der Filter (12) eine Kontrolleinheit (30) umfaßt, die dazu ausgelegt ist, das Signal PSV in ein Signal PS zu übersetzen.

13. Energiemanagementvorrichtung nach einem der vorhergehenden Ansprüche,
    **dadurch gekennzeichnet,**
    **daß** die Kontrolleinheit (30) dazu ausgelegt ist, das Signal PSV in ein neutrales Signal $PS_N$ zu übersetzen, wenn das Signal PSV eine gefilterte Leistungsreserve codiert und ein m tes Signal PSV nach mindestens einem PSV-Signal, das eine Überlast codiert, ist, wobei m eine natürliche Zahl von 1 bis 10, insbesondere von 1 bis 3, ist.

14. Energiemanagementvorrichtung nach einem der vorhergehenden Ansprüche,
    **dadurch gekennzeichnet,**
    **daß** die Energiemanagementvorrichtung eine Leistungsstelleinheit (14, 14a, 14b) umfaßt, an die die Leistungsreserve oder Überlast DP oder das Signal PSV oder das Signal PS übermittelbar ist, wobei die Leistungsstelleinheit (14, 14a, 14b) dazu ausgelegt ist, die Leistungsreserve oder Überlast DP oder das Signal PSV oder das Signal PS in mindestens ein Steuersignal PP für mindestens einen Verbraucher (16a, 16i) zu übersetzen und das mindestens eine Steuersignal PP an den mindestens einen Verbraucher (16a, 16i) zu übermitteln.

**15.** Energiemanagementvorrichtung nach Anspruch 14,
**dadurch gekennzeichnet,**
**daß** die Leistungsreserve oder Überlast DP oder das Signal PSV oder das Signal PS in Abhängigkeit von einer Priorität des mindestens einen Verbrauchers (16a, 16i) und/oder einer Leistungsanforderung des mindestens einen Verbrauchers (16a, 16i) und/oder einem Betriebszustand des mindestens einen Verbrauchers (16a, 16i) in das mindestens eine Steuersignal PP durch die Leistungsstelleinheit (14, 14a, 14b) übersetzbar ist, wobei die Priorität des mindestens einen Verbrauchers (16a, 16i) und/oder die Leistungsanforderung des mindestens einen Verbrauchers (16a, 16i) und/oder der Betriebszustand des mindestens einen Verbrauchers (16a, 16i) in der Leistungsstelleinheit (14, 14a, 14b) abgelegt oder durch die Leistungsstelleinheit (14, 14a, 14b) ermittelbar ist.

**16.** Energiemanagementvorrichtung nach einem der Ansprüche 14 oder 15,
**dadurch gekennzeichnet,**
**daß** das mindestens eine Steuersignal PP eine stufenweise Erhöhung oder Erniedrigung einer Verbraucherleistung des mindestens einen Verbrauchers (16a, 16i) codiert.

**17.** Energiemanagementvorrichtung nach einem der Ansprüche 14 oder 15,
**dadurch gekennzeichnet,**
**daß** das mindestens eine Steuersignal PP eine Ein-/Ausschaltung des mindestens einen Verbrauchers (16a, 16i) codiert.

**18.** Energiemanagementvorrichtung nach einem der Ansprüche 14 bis 17, **dadurch gekennzeichnet,**
**daß** die Leistungsstelleinheit (14, 14a, 14b) dazu ausgelegt ist, eine erste Rückmeldung an den Filter (12) und/oder die Prädiktoreinheit (10) zu initiieren, wenn ein Stellvorgang des mindestens einen Verbrauchers (16a, 16i) durch das mindestens eine Steuersignal PP initiiert worden ist.

**19.** Energiemanagementvorrichtung nach einem der Ansprüche 14 bis 18, **dadurch gekennzeichnet,**
**daß** die Leistungsstelleinheit (14, 14a, 14b) dazu ausgelegt ist, eine zweite Rückmeldung an den Filter (12) und/oder die Prädiktoreinheit (10) zu initiieren, wenn ein Stellvorgang des mindestens einen Verbrauchers (16a, 16i) durch das mindestens eine Steuersignal PP abgeschlossen ist.

**20.** Energiemanagementvorrichtung nach einem der Ansprüche 18 oder 19,
**dadurch gekennzeichnet,**
**daß** der Filter (12) und/oder die Prädiktoreinheit (10) durch die erste Rückmeldung in einen Wartemodus überführbar ist und/oder durch die zweite Rückmeldung ein Neustart initiierbar ist.

**21.** Energiemanagementvorrichtung nach Anspruch 20,
**dadurch gekennzeichnet,**
**daß** die Leistungsreserve oder Überlast DP und/oder der Summenwert DPI und/oder das Signal PS und/oder das Signal PSV durch den Filter (12) und/oder durch die Prädiktoreinheit (10) in dem Wartemodus einen neutralen Wert erhält.

**22.** Energiemanagementvorrichtung nach einem der Ansprüche 14 bis 21, **dadurch gekennzeichnet,**
**daß** sie, insbesondere die Leistungsstelleinheit (14, 14a, 14b), dazu ausgelegt ist, ein Notabschaltungssignal (NAS) zu erzeugen und an mindestens eine weitere Leistungsstelleinheit (14, 14a, 14b) zu übermitteln, wenn ein zeitlicher Durchschnittswert PS* des Signals PS oder ein zeitlicher Durchschnittswert DP* der Leistungsreserve oder Überlast DP einen Schwellenwert erreicht.

**23.** Energiemanagementvorrichtung nach Anspruch 22,
daß die Leistungsstelleinheit (14, 14a, 14b) dazu ausgelegt ist, das Notabschaltungssignal an die mindestens eine weitere Leistungsstelleinheit (14, 14a, 14b) zu übermitteln, wenn der zeitliche Durchschnittswert PS* des Signals PS oder der zeitliche Durchschnittswert DP* der Leistungsreserve oder Überlast DP nach Abschluß des mindestens einen Stellvorgangs des mindestens einen Verbrauchers (16a, 16i, 18a, 18i) durch das mindestens eine Steuersignal PP einen Schwellenwert erreicht.

**24.** Energiemanagementvorrichtung nach Anspruch 23,
**dadurch gekennzeichnet,**
**daß** die weitere Leistungsstelleinheit (14, 14a, 14b) dazu ausgelegt ist, das Notabschaltungssignal in mindestens ein Steuersignal NAS für mindestens einen weiteren Verbraucher (18a, 18i) zu übersetzen und das mindestens eine Steuersignal NAS an den mindestens einen weiteren Verbraucher (18a, 18i) zu übermitteln.

**25.** Energiemanagementvorrichtung nach einem der Ansprüche 23 oder 24,
**dadurch gekennzeichnet,**
**daß** das Notabschaltungssignal in Abhängigkeit von einer Priorität des mindestens einen weitern Verbrauchers und/oder einer Leistungsanforderung des mindestens einen weiteren Verbrauchers und/oder einem Betriebszustand des mindestens einen weiteren Verbrauchers durch die weitere Leistungsstelleinheit (14, 14a, 14b) in das mindestens eine Steuersignal NAS übersetzbar ist, wobei die Priorität des mindestens einen weiteren Verbrauchers (18a, 18i) und/oder die Leistungsanforderung des mindestens einen weiteren Verbrauchers (18a, 18i) und/oder der Betriebszustand des mindestens einen weiteren Verbrauchers (18a, 18i) in der weiteren Leistungsstelleinheit (14, 14a, 14b) abgelegt oder durch die weitere Leistungsstelleinheit (14, 14a, 14b) ermittelbar ist.

**26.** Energiemanagementvorrichtung nach einem der Ansprüche 24 oder 25,
**dadurch gekennzeichnet,**
**daß** das mindestens eine Steuersignal NAS eine stufenweise Erhöhung oder Erniedrigung einer Verbraucherleistung des mindestens einen weiteren Verbrauchers (18a, 18i) codiert.

**27.** Energiemanagementvorrichtung nach einem der Ansprüche 24 oder 25,
**dadurch gekennzeichnet,**
**daß** das mindestens eine Steuersignal NAS eine Ein-/Ausschaltung des mindestens einen weiteren Verbrauchers (18a, 18i) codiert.

**28.** Energiemanagementvorrichtung nach einem der Ansprüche 14 bis 27, **dadurch gekennzeichnet,**
**daß** die Leistungsstelleinheit (14, 14a, 14b) oder eine weitere Leistungsstelleinheit dazu ausgelegt ist, ein Leerlaufdrehzahlanhebungssignal zu erzeugen und an ein Motorsteuergerät (22) des Fahrzeugs zu übermitteln, wenn ein zeitlicher Mittelwert von negativen Batterieströmen $I_{battneg}$ über eine Zeitdauer $\Delta T_3$ einen Schwellenwert erreicht.

**29.** Energiemanagementvorrichtung nach Anspruch 28,
**dadurch gekennzeichnet,**
**daß** die Leistungsstelleinheit (14, 14a, 14b) oder die weitere Leistungsstelleinheit dazu ausgelegt ist, ein Leerlaufdrehzahlanhebungssignal zu erzeugen und an das Motorsteuergerät des Fahrzeugs zu übermitteln, wenn die der zeitliche Mittelwert von negativen Batterieströmen $I_{battneg}$ über eine Zeitdauer $\Delta T_3$ nach Abschluß des mindestens einen Stellvorgangs des mindestens einen Verbrauchers (16a, 16i) durch das mindestens eine Steuersignal PP oder des mindestens einen weiteren Verbrauchers (18a, 18i) durch das mindestens eine Steuersignal NAS den Schwellenwert erreicht.

**30.** Energiemanagementvorrichtung nach einem der Ansprüche 28 oder 29,
**dadurch gekennzeichnet,**
**daß** das Motorsteuergerät (22) dazu ausgelegt ist, die Drehzahl der Motors in Abhängigkeit des Leerlaufdrehzahlanhebungssignals zu steuern.

**31.** Energiemanagementverfahren zum Energiemanagement in einem Fahrzeug, umfassend folgende Schritte:

a) Erfassen

- einer maximal abgebbaren Leistung $P_{max}$ eines Generators des Fahrzeugs,
- einer tatsächlich abgegebenen Leistung des Generators $P_{gen}$,
- eines Stroms $I_{batt}$ zu einer Batterie des Fahrzeugs und
- einer Spannung $U_{batt}$ der Batterie;

b) Berechnen einer Leistungsreserve oder einer Überlast DP in einem Energienetz des Fahrzeugs, das mindestens die Batterie und den Generator umfaßt, aus den in Schritt a) erfaßten Eingangsgrößen und einem vorbestimmten Wert für eine Generatorauslastungsbegrenzung K durch den Algorithmus

$$DP = (P_{max} - P_{gen} - K) + (I_{batt} * U_{batt}) D + X,$$

wobei der Term D gleich 0 gesetzt wird, wenn $I_{batt} > 0$ ist, und wobei X gleich 0 oder ungleich 0 ist;
c) Filtern der in Abhängigkeit der Zeit ermittelten Leistungsreserve oder Überlast DP,
wobei die Filterung folgende Schritte umfasst:

- Aufsummieren jeweils nach einer vorbestimmten Zeitdauer $\Delta T_1$ der ermittelten Werte für die Leistungsreserve oder Überlast DP zu einem Summenwert DPI bis der Summenwert DPI einen oberen oder einen unteren Schwellenwert erreicht hat,
- Initiieren eines Resets mit einem neuen Startpunkt für die Zeitdauer $\Delta T_1$ und Gleich-0-Setzen des Summenwerts DPI, wenn der Summenwert DPI den oberen oder unteren Schwellenwert erreicht hat,
- Ermitteln einer Zeitdauer $\Delta T_2$ bis zum Erreichen des oberen oder unteren Schwellenwerts, und
- Zuordnen zu der ermittelten Zeitdauer $\Delta T_2$ in Abhängigkeit davon, ob der obere oder der untere Schwellenwert erreicht wurde, eines Signals PSV, das die gefilterte Leistungsreserve oder Überlast codiert.

**32.** Energiemanagementverfahren nach Anspruch 31,
**dadurch gekennzeichnet,**
**daß** das Bestimmen der maximal abgebbaren Leistung $P_{max}$ des Generators in Schritt a) in mindestens zwei Teilschritten

a') Erfassen einer Drehzahl n eines Motors des Fahrzeugs und einer für eine Temperatur des Generators signifikanten Temperatur T
und
a") Bestimmen der maximal abgebbaren Leistung $P_{max}$ des Generators aus der Drehzahl n und der Temperatur T erfolgt.

## Claims

**1.** Energy management apparatus for energy management in a vehicle,
having a predictor unit (10) for determination of a power margin or of an overload DP in an energy network in the vehicle, with the energy network having at least one battery and one generator for the vehicle,
with the predictor unit (10) being designed to record at least the following input variables:

- the maximum power $P_{max}$ which can be emitted from the generator,
- the power $P_{gen}$ which is actually being emitted from the generator,
- a current $I_{batt}$ to the battery, and
- a voltage $U_{batt}$ of the battery,

with the predictor unit (10) furthermore being designed to calculate the power margin or overload DP from these input variables and from a predetermined value for a generator load limit K by means of the algorithm

$$DP = (P_{max} - P_{gen} - K) + (I_{batt} * U_{batt}) * D + X$$

where the term D is equal to 0 when $I_{batt} > 0$, and where the term X is equal to 0 or is not equal to 0,
with the energy management apparatus furthermore having a filter (12) for filtering the power margin or overload DP determined as a function of the time,
with the filter (12) having an integrator unit (28) which is designed:

- in each case after a predetermined time period $\Delta T_1$, to add up values determined for the power margin or overload DP to form a sum value DPI, until the sum value DPI has reached an upper or a lower threshold value,
- to initiate a reset with a new start time for the time period $\Delta T_1$ and to set the sum value DPI to be equal to zero when the sum value DPI has reached the upper or lower threshold value,
- to determine a time period $\Delta T_2$ to reach the upper or lower threshold value, and
- to associate a signal PSV, which codes the filtered power margin or overload, with the determined time period $\Delta T_2$, as a function of whether the upper or the lower threshold value has been reached.

**2.** Energy management apparatus according to Claim 1, **characterized**

**in that** K is in a range between 0 W and 250 W, and in particular is 50 W or 150 W.

3. Energy management apparatus according to one of the preceding claims, **characterized**
 **in that** the term X is a correction term
 -A when $U_{batt} < U_{min}$, where $U_{min}$ is, in particular, 12 V or 36 V, and where A is, in particular, 400 W.

4. Energy management apparatus according to one of the preceding claims, **characterized**
 **in that** the predictor unit (10) is designed to record as a further input variable a current $I_{gen}$ away from the generator, with the predictor unit (10) furthermore being designed to calculate the power margin or overload DP in addition to the input variables and the predetermined value for the generator load limit K from the further input variable and from a predetermined lower limit value for the battery or energy network voltage $U_{limit}$ by means of the algorithm, with the term X comprising a term

$$+ (U_{batt} - U_{limit}) * B * (I_{gen} - I_{batt})$$

 which is specific for a power difference on the basis of a voltage drop caused by at least one load (16a, 16i, 18a, 18i), with B representing a correction factor which, in particular, is in the range between 0.5 and 2, and with $U_{batt}$ representing the voltage of the battery or the voltage of the energy network.

5. Energy management apparatus according to Claim 4, **characterized**
 **in that** $U_{limit}$ is essentially 12.8 V.

6. Energy management apparatus according to one of the preceding claims, **characterized**
 **in that** a generator model is stored in the predictor unit (10), by means of which the maximum power $P_{max}$ which can be emitted from the generator can be determined from the rotation speed n of a motor or engine in the vehicle and from a temperature T which is significant for the temperature of the generator.

7. Energy management apparatus according to Claim 6, **characterized**
 **in that** the temperature T is a cooling water temperature.

8. Energy management apparatus according to one of the preceding claims, **characterized**
 **in that** the energy management apparatus has at least one measurement element which is designed to determine at least one of the input variables and/or the rotation speed n and/or the temperature T and/or the further input variable, with the at least one measurement element being connected to the predictor unit (10) in order to transmit the at least one input variable and/or the rotation speed n and/or the temperature T and/or the further input variable.

9. Energy management apparatus according to Claim 8, **characterized**
 **in that** the at least one measurement element is designed to determine the at least one input variable and/or the rotation speed n and/or the temperature T and/or the further input variable at a first rate in each case, and/or to transmit them or it to the predictor unit (10), in each case at a second rate.

10. Energy management apparatus according to Claim 9, **characterized**
 **in that** the first rate corresponds to the second rate.

11. Energy management apparatus according to one of Claims 9 or 10, **characterized**
 **in that** the first and/or the second rate are/is in the range from 1/1000 ms$^{-1}$ to 1/10 ms$^{-1}$, in particular essentially 1/100 ms$^{-1}$.

12. Energy management apparatus according to one of the preceding claims, **characterized**
 **in that** the filter (12) has a monitoring unit (30), which is designed to convert the signal PSV to a signal PS.

**13.** Energy management apparatus according to one of the preceding claims, **characterized in that** the monitoring unit (30) is designed to convert the signal PSV to a neutral signal $PS_N$ when the signal PSV is coding a filtered power margin and an m-th signal PSV after at least one PSV signal which codes an overload, where m is a natural number from 1 to 10, in particular from 1 to 3.

**14.** Energy management apparatus according to one of the preceding claims, **characterized in that** the energy management apparatus has a power control unit (14, 14a, 14b), to which the power margin, the overload DP, the signal PSV or the signal PS can be transmitted, with the power control unit (14, 14a, 14b) being designed to convert the power margin, the overload DP, the signal PSV or the signal PS to at least one control signal PP for at least one load (16a, 16i), and to transmit the at least one control signal PP to the at least one load (16a, 16i).

**15.** Energy management apparatus according to Claim 14, **characterized in that** the power margin, the overload DP, the signal PSV or the signal PS can be converted by the power control unit (14, 14a, 14b) to the at least one control signal PP as a function of the priority of the at least one load (16a, 16i) and/or of a power demand by the at least one load (16a, 16i) and/or an operating state of the at least one load (16a, 16i), in which case the priority of the at least one load (16a, 16i) and/or the power demanded by the at least one load (16a, 16i) and/or the operating state of the at least one load (16a, 16i) is stored in the power control unit (14, 14a, 14b), or can be determined by the power control unit (14, 14a, 14b).

**16.** Energy management apparatus according to one of Claims 14 or 15, **characterized in that** the at least one control signal PP codes a step-by-step increase or decrease in the load power of the at least one load (16a, 16i).

**17.** Energy management apparatus according to one of Claims 14 or 15, **characterized in that** the at least one control signal PP codes on/off switching of the at least one load (16a, 16i).

**18.** Energy management apparatus according to one of Claims 14 to 17, **characterized in that** the power control unit (14, 14a, 14b) is designed to initiate a first feedback message to the filter (12) and/or to the predictor unit (10) when a control process for the at least one load (16a, 16i) has been initiated by the at least one control signal PP.

**19.** Energy management apparatus according to one of Claims 14 to 18, **characterized in that** the power control unit (14, 14a, 14b) is designed to initiate a second feedback message to the filter (12) and/or to the predictor unit (10) when a control process for the at least one load (16a, 16i) has been completed by the at least one control signal PP.

**20.** Energy management apparatus according to one of Claims 18 or 19, **characterized in that** the filter (12) and/or the predictor unit (10) can be switched by the first feedback message to a waiting mode and/or a restart can be initiated by the second feedback message.

**21.** Energy management apparatus according to Claim 20, **characterized in that** the power margin or overload DP and/or the sum value DPI and/or the signal PS and/or the signal PSV are/is given a neutral value by the filter (12) and/or by the predictor unit (10) in the waiting mode.

**22.** Energy management apparatus according to one of Claims 14 to 21, **characterized in that** the energy management apparatus, in particular the power control unit (14, 14a, 14b), is designed to produce an emergency switch-off signal (NAS) and to transmit this to at least one further power control unit (14, 14a, 14b) when an average value PS* of the signal PS over time or an average value DP* of the power margin or an overload DP over time reaches a threshold value.

23. Energy management apparatus according to Claim 22, **characterized in that** the power control unit (14, 14a, 14b) is designed to transmit the emergency switch-off signal to the at least one further power control unit (14, 14a, 14b) when the average value PS* of the signal PS over time or the average value DP* of the power margin or the overload DP over time reaches a threshold value after completion of the at least one control process for the at least one load (16a, 16i, 18a, 18i) by the at least one control signal PP.

24. Energy management apparatus according to Claim 23, **characterized in that** the further power control unit (14, 14a, 14b) is designed to convert the emergency switch-off signal to at least one control signal NAS for at least one further load (18a, 18i), and to transmit the at least one control signal NAS to the at least one further load (18a, 18i).

25. Energy management apparatus according to one of Claims 23 or 24, **characterized in that** the emergency switch-off signal can be converted to the at least one control signal NAS by the further power control unit (14, 14a, 14b) as a function of the priority of the at least one further load and/or the power demand of the at least one further load and/or the operating state of the at least one further load, in which case the priority of the at least one further load (18a, 18i) and/or the power demand of the at least one further load (18a, 18i) and/or the operating state of the at least one further load (18a, 18i) are stored in the further power control unit (14, 14a, 14b), or can be determined by the further power control unit (14, 14a, 14b).

26. Energy management apparatus according to one of Claims 24 or 25, **characterized in that** the at least one control signal NAS codes a step-by-step increase or decrease in the load power of the at least one further load (18a, 18i).

27. Energy management apparatus according to one of Claims 24 or 25, **characterized in that** the at least one control signal NAS codes the switching on/off of the at least one further load (18a, 18i).

28. Energy management apparatus according to one of Claims 14 to 27, **characterized in that** the power control unit (14, 14a, 14b) or a further power control unit is designed to produce an idling speed raising signal and to transmit this to a motor or engine controller (22) for the vehicle when a mean value of the negative battery currents $I_{battneg}$ over time reaches a threshold value over a time period $\Delta T_3$.

29. Energy management apparatus according to Claim 28, **characterized in that** the power control unit (14, 14a, 14b) or the further power control unit is designed to produce an idling speed raising signal and to transmit this to the motor or engine controller for the vehicle where the mean value of the negative battery currents $I_{battneg}$ over time reaches the threshold value over a time period $\Delta T_3$ after completion of the at least one control process for the at least one load (16a, 16i) by the at least one control signal PP, or for the at least one further load (18a, 18i) by the at least one control signal NAS.

30. Energy management apparatus according to one of Claims 28 or 29, **characterized in that** the motor or engine controller (22) is designed to control the rotation speed of the motor or engine as a function of the idling speed raising signal.

31. Energy management method for energy management in a vehicle, comprising the following steps:

   a) recording

   - of the maximum power $P_{max}$ which can be emitted from a generator in the vehicle,
   - of the power which is actually being emitted from the generator $P_{gen}$,
   - of a current $I_{batt}$ to a battery in the vehicle, and
   - of a voltage $U_{batt}$ of the battery;

   b) calculation of a power margin or of an overload DP in an energy network in the vehicle, which has at least the battery and the generator, from the input variables recorded in step a) and calculation of a predetermined value for a generator load limit K by means of the algorithm

$$DP = (P_{max} - P_{gen} - K) + (I_{batt} * U_{batt}) \ D + X,$$

where the term D is equal to 0 when $I_{batt} > 0$, and where X is equal to 0 or is not equal to 0;
c) filtering the power margin or overload DP determined as a function of the time,
wherein the filtering comprises the following steps:

- in each case after a predetermined time $\Delta T_1$, addition of the values determined for the power margin or overload DP to form a sum value DPI, until the sum value DPI has reached an upper or a lower threshold value,
- initiation of a reset with a new start time for the time period $\Delta T_1$ and setting of the sum value DPI to be equal to 0 when the sum value DPI has reached the upper or lower threshold value,
- determination of a time period $\Delta T_2$ to reach the upper or lower threshold value, and
- association of a signal PSV, which codes the filtered power margin or overload, with the determined time period $\Delta T_2$, as a function of whether the upper or the lower threshold value has been reached.

32. Energy management method according to Claim 31, **characterized in that** the determination of the maximum power $P_{max}$ which can be emitted from the generator in step a) is carried out in at least two step elements

a') recording of a rotation speed n of the motor or engine of the vehicle, and of a temperature T which is significant for the temperature of the generator,
and
a") determination of the maximum power $P_{max}$ which can be emitted from the generator, from the rotation speed n and the temperature T.

**Revendications**

1. Dispositif de gestion d'énergie pour la gestion d'énergie dans un véhicule,
comprenant une unité de prédiction (10) pour déterminer une réserve de puissance ou une surcharge DP dans un réseau d'énergie du véhicule, le réseau d'énergie comprenant au moins une batterie et un générateur du véhicule, l'unité de prédiction (10) étant conçue pour détecter au moins les grandeurs d'entrée suivantes

- une puissance maximale pouvant être fournie $P_{max}$ du générateur,
- une puissance effectivement fournie $P_{gen}$ du générateur,
- un courant $I_{batt}$ vers la batterie et
- une tension $U_{batt}$ de la batterie,

l'unité de prédiction (10) étant en outre conçue pour calculer la réserve de puissance ou la surcharge DP à partir de ces grandeurs d'entrée et d'une valeur prédéterminée pour une limitation du rendement du générateur K par l'algorithme :

$$DP = (P_{max} - P_{gen} - K) + (I_{batt} * U_{batt}) * D + X,$$

le terme D étant fixé comme égal à 0, si $I_{batt} > 0$, le terme X étant soit égal à 0 soit différent de 0,
le dispositif de gestion d'énergie comprenant en outre un filtre (12) pour filtrer la réserve de puissance ou la surcharge DP déterminée en fonction du temps,
le filtre (12) comprenant une unité d'intégration (28), qui est conçue

- pour additionner à chaque fois des valeurs déterminées après une durée prédéterminée $\Delta T_1$ pour la réserve de puissance ou la surcharge DP pour donner une somme DPI, jusqu'à ce que la somme DPI ait atteint une valeur seuil supérieure ou inférieure,

- pour amorcer une réinitialisation avec un nouveau point de départ pour la durée $\Delta T_1$ et pour mettre à 0 la somme DPI, une fois que la somme DPI a atteint la valeur seuil supérieure ou inférieure,
- pour déterminer une durée $\Delta T_2$ jusqu'à l'obtention de la valeur seuil supérieure ou inférieure et
- pour associer à la durée $\Delta T_2$ déterminée un signal PSV, qui code la réserve de puissance ou la surcharge filtrée en fonction de la valeur seuil soit supérieure soit inférieure qui a été atteinte.

**2.** Dispositif de gestion d'énergie selon la revendication 1,
**caractérisé en ce que**
K est compris dans une plage de 0 W à 250 W, notamment vaut 50 W ou 150 W.

**3.** Dispositif de gestion d'énergie selon l'une quelconque des revendications précédentes, **caractérisé en ce que**
le terme X comprend un terme de correction
-A
lorsque $U_{batt} < U_{min}$, avec $U_{min}$ valant notamment 12 V ou 36 V, et avec A valant notamment 400 W.

**4.** Dispositif de gestion d'énergie selon l'une quelconque des revendications précédentes, **caractérisé en ce que**
l'unité de prédiction (10) est conçue pour détecter en tant qu'autre grandeur d'entrée un courant $I_{gen}$ provenant du générateur, l'unité de prédiction (10) étant en outre conçue pour calculer la réserve de puissance ou la surcharge DP en plus des grandeurs d'entrée et de la valeur prédéterminée pour la limitation du rendement du générateur K à partir des autres grandeurs d'entrée et d'une valeur limite inférieure prédéterminée pour la tension de la batterie ou du réseau d'énergie $U_{grenze}$ par l'algorithme dans lequel le terme X inclut un terme

$$+ \ (U_{batt} \ - \ U_{grenze}) \ \star \ B \ \star \ (I_{gen} \ - \ I_{batt}),$$

qui est spécifique d'une différence de puissance sur la base d'une diminution de tension par au moins un consommateur (16a, 16i, 18a, 18i), B représentant un facteur de correction qui est notamment compris dans la plage de 0,5 à 2 et $U_{batt}$ représentant la tension de la batterie ou la tension du réseau d'énergie.

**5.** Dispositif de gestion d'énergie selon la revendication 4,
**caractérisé en ce que**
$U_{grenze}$ vaut sensiblement 12.8 V.

**6.** Dispositif de gestion d'énergie selon l'une quelconque des revendications précédentes, **caractérisé en ce que**
dans l'unité de prédiction (10) est déposé un modèle de générateur, à l'aide duquel la puissance maximale pouvant être fournie $P_{max}$ du générateur peut être déterminée à partir d'un régime n d'un moteur du véhicule et d'une température T significative pour une température du générateur.

**7.** Dispositif de gestion d'énergie selon la revendication 6,
**caractérisé en ce que**
la température T est une température d'eau de refroidissement.

**8.** Dispositif de gestion d'énergie selon l'une quelconque des revendications précédentes, **caractérisé en ce que**
le dispositif de gestion d'énergie présente au moins un élément de mesure, qui est réalisé pour déterminer au moins les grandeurs d'entrée et/ou le régime n et/ou la température T et/ou les autres grandeurs d'entrée, l'au moins un élément de mesure, pour transmettre l'au moins une grandeur d'entrée et/ou le régime n et/ou la température T et/ou l'autre grandeur d'entrée, étant connecté à l'unité de prédiction (10).

**9.** Dispositif de gestion d'énergie selon la revendication 8,
**caractérisé en ce que**
l'au moins un élément de mesure est réalisé pour déterminer l'au moins une grandeur d'entrée et/ou le régime n et/ou la température T et/ou l'autre grandeur d'entrée à chaque fois avec une première vitesse et/ou pour la transmettre avec une deuxième vitesse respective à l'unité de prédiction (10).

**10.** Dispositif de gestion d'énergie selon la revendication 9,
**caractérisé en ce que**

la première vitesse correspond à la deuxième vitesse.

**11.** Dispositif de gestion d'énergie selon l'une quelconque des revendications 9 ou 10,
**caractérisé en ce que**
la première et/ou la deuxième vitesse sont comprises dans une plage de 1/1000 ms$^{-1}$ à 1/10 ms$^{-1}$, notamment vaut sensiblement 1/100 ms$^{-1}$.

**12.** Dispositif de gestion d'énergie selon l'une quelconque des revendications précédentes, **caractérisé en ce que**
le filtre (12) comprend une unité de commande (30) qui est conçue pour convertir le signal PSV en un signal PS.

**13.** Dispositif de gestion d'énergie selon l'une quelconque des revendications précédentes, **caractérisé en ce que**
l'unité de commande (30) est conçue pour convertir le signal PSV en un signal neutre PS$_N$ lorsque le signal PSV code une réserve de puissance filtrée et est un m ième signal PSV après au moins un signal PSV qui code une surcharge, m étant un nombre naturel de 1 à 10, notamment de 1 à 3.

**14.** Dispositif de gestion d'énergie selon l'une quelconque des revendications précédentes, **caractérisé en ce que**
le dispositif de gestion d'énergie comprend une unité de commande de puissance (14, 14a, 14b) à laquelle la réserve de puissance ou la surcharge DP ou le signal PSV ou le signal PS peuvent être transmis, l'unité de commande de puissance (14, 14a, 14b) étant conçue pour convertir la réserve de puissance ou la surcharge DP ou le signal PSV ou le signal PS en au moins un signal de commande PP pour au moins un consommateur (16a, 16i) et pour transmettre l'au moins un signal de commande PP à l'au moins un consommateur (16a, 16i).

**15.** Dispositif de gestion d'énergie selon la revendication 14,
**caractérisé en ce que**
la réserve de puissance ou la surcharge DP ou le signal PSV ou le signal PS peuvent être convertis en fonction d'une priorité de l'au moins un consommateur (16a, 16i) et/ou d'une demande de puissance de l'au moins un consommateur (16a, 16i) et/ou d'un état de fonctionnement de l'au moins un consommateur (16a, 16i) en l'au moins un signal de commande PP par l'unité de commande de puissance (14, 14a, 14b), la priorité de l'au moins un consommateur (16a, 16i) et/ou la demande de puissance de l'au moins un consommateur (16a, 16i) et/ou l'état de fonctionnement de l'au moins un consommateur (16a, 16i) étant déposés dans l'unité de commande de puissance (14, 14a, 14b) ou pouvant être déterminés par l'unité de commande de puissance (14, 14a, 14b).

**16.** Dispositif de gestion d'énergie selon l'une quelconque des revendications 14 ou 15, **caractérisé en ce que**
l'au moins un signal de commande PP code une augmentation par incrément ou une réduction par incrément d'une puissance de consommateur de l'au moins un consommateur (16a, 16i).

**17.** Dispositif de gestion d'énergie selon l'une quelconque des revendications 14 ou 15, **caractérisé en ce que**
l'au moins un signal de commande PP code une commutation marche/arrêt de l'au moins un consommateur (16a, 16i).

**18.** Dispositif de gestion d'énergie selon l'une quelconque des revendications 14 à 17,
**caractérisé en ce que**
l'unité de commande de puissance (14, 14a, 14b) est conçue de telle sorte qu'elle amorce une première information en retour au filtre (12) et/ou à l'unité de prédiction (10), lorsqu'une opération de réglage de l'au moins un consommateur (16a, 16i) a été amorcée par l'au moins un signal de commande PP.

**19.** Dispositif de gestion d'énergie selon l'une quelconque des revendications 14 à 18,
**caractérisé en ce que**
l'unité de commande de puissance (14, 14a, 14b) est conçue de telle sorte qu'elle amorce une deuxième information en retour au filtre (12) et/ou à l'unité de prédiction (10), lorsqu'une opération de réglage de l'au moins un consommateur (16a, 16i) est terminée par l'au moins un signal de commande PP.

**20.** Dispositif de gestion d'énergie selon l'une quelconque des revendications 18 ou 19, **caractérisé en ce que**
le filtre (12) et/ou l'unité de prédiction (10) peuvent être transférés par la première information en retour dans un mode de veille et/ou une réinitialisation peut être amorcée par la deuxième information en retour.

**21.** Dispositif de gestion d'énergie selon la revendication 20,
**caractérisé en ce que**

la réserve de puissance ou la surcharge DP et/ou la somme DPI et/ou le signal PS et/ou le signal PSV acquièrent une valeur neutre par le filtre (12) et/ou par l'unité de prédiction (10) en mode de veille.

**22.** Dispositif de gestion d'énergie selon l'une quelconque des revendications 14 à 21,
**caractérisé en ce que**
celui-ci, en particulier l'unité de commande de puissance (14, 14a, 14b), est conçu de manière à produire un signal d'arrêt d'urgence (NAS) et à le communiquer à au moins une autre unité de commande de puissance (14, 14a, 14b) lorsqu'une valeur moyenne temporelle PS* du signal PS ou une valeur moyenne temporelle DP* de la réserve de puissance ou de la surcharge DP atteint une valeur seuil.

**23.** Dispositif de gestion d'énergie selon la revendication 22,
**caractérisé en ce que**
l'unité de commande de puissance (14, 14a, 14b) est conçue de manière à communiquer le signal d'arrêt d'urgence à l'au moins une autre unité de commande de puissance (14, 14a, 14b) lorsque la valeur moyenne temporelle PS* du signal PS ou la valeur moyenne temporelle DP* de la réserve de puissance ou de la surcharge DP, après l'arrêt de l'au moins une opération de réglage de l'au moins un consommateur (16a, 16i, 18a, 18i) par l'au moins un signal de commande PP, atteint une valeur seuil.

**24.** Dispositif de gestion d'énergie selon la revendication 23,
**caractérisé en ce que**
l'autre unité de commande de puissance (14, 14a, 14b) est conçue de manière à convertir le signal d'arrêt d'urgence en au moins un signal de commande NAS pour au moins un autre consommateur (18a, 18i) et pour communiquer l'au moins un signal de commande NAS à l'au moins un autre consommateur (18a, 18i).

**25.** Dispositif de gestion d'énergie selon l'une quelconque des revendications 23 ou 24, **caractérisé en ce que**
le signal d'arrêt d'urgence peut être converti en fonction d'une priorité de l'au moins un autre consommateur et/ou d'une demande de puissance de l'au moins un autre consommateur et/ou d'un état de fonctionnement de l'au moins un autre consommateur par l'autre unité de commande de puissance (14, 14a, 14b) en l'au moins un signal de commande NAS, la priorité de l'au moins un autre consommateur (18a, 18i) et/ou la demande de puissance de l'au moins un autre consommateur (18a, 18i) et/ou l'état de fonctionnement de l'au moins un autre consommateur (18a, 18i) étant déposés dans l'autre unité de commande de puissance (14, 14a, 14b) ou pouvant être déterminés par l'autre unité de commande de puissance (14, 14a, 14b).

**26.** Dispositif de gestion d'énergie selon l'une quelconque des revendications 24 ou 25, **caractérisé en ce que**
l'au moins un signal de commande NAS code une augmentation par incrément ou une réduction par incrément d'une puissance de consommateur de l'au moins un autre consommateur (18a, 18i).

**27.** Dispositif de gestion d'énergie selon l'une quelconque des revendications 24 ou 25, **caractérisé en ce que**
l'au moins un signal de commande NAS code une commutation marche/arrêt de l'au moins un autre consommateur (18a, 18i).

**28.** Dispositif de gestion d'énergie selon l'une quelconque des revendications 14 à 27,
**caractérisé en ce que**
l'unité de commande de puissance (14, 14a, 14b) ou une autre unité de commande de puissance est conçue de manière à produire un signal d'augmentation du régime de marche à vide et à le communiquer à un appareil de commande de moteur (22) du véhicule lorsqu'une valeur moyenne temporelle de courants négatifs de la batterie $I_{battneg}$, sur une durée $\Delta T_3$, atteint une valeur seuil.

**29.** Dispositif de gestion d'énergie selon la revendication 28,
**caractérisé en ce que**
l'unité de commande de puissance (14, 14a, 14b) ou l'autre unité de commande de puissance est conçue de manière à produire un signal d'augmentation du régime de marche à vide et à le communiquer à l'appareil de commande de moteur du véhicule lorsque la valeur moyenne temporelle de courants négatifs de la batterie $I_{battneg}$, sur une durée $\Delta T_3$, après la fin de l'au moins une opération de réglage de l'au moins un consommateur (16a, 16i) par l'au moins un signal de commande PP ou de l'au moins un autre consommateur (18a, 18i) par l'au moins un signal de commande NAS atteint la valeur seuil.

**30.** Dispositif de gestion d'énergie selon l'une quelconque des revendications 28 ou 29, **caractérisé en ce que**

l'appareil de commande de moteur (22) est conçu de manière à commander le régime du moteur en fonction du signal d'augmentation du régime de marche à vide.

**31.** Procédé de gestion d'énergie pour la gestion d'énergie dans un véhicule, comprenant les étapes consistant à :

a) détecter

- une puissance maximale pouvant être fournie $P_{max}$ d'un générateur du véhicule,
- une puissance effectivement fournie $P_{gen}$ du générateur,
- un courant $I_{batt}$ vers une batterie du véhicule et
- une tension $U_{batt}$ de la batterie ;

b) calculer une réserve de puissance ou une surcharge DP dans un réseau d'énergie du véhicule, qui inclut au moins la batterie et le générateur, à partir des grandeurs d'entrée détectées dans l'étape a) et d'une valeur prédéterminée pour une limitation de rendement du générateur K par l'algorithme

$$DP = (P_{max} - P_{gen} - K) + (I_{batt} * U_{batt}) * D + X,$$

le terme D étant fixé comme égal à 0, si $I_{batt} > 0$, le terme X étant soit égal à 0 soit différent de 0 ;
c) filtrer la réserve de puissance ou la surcharge DP déterminée en fonction du temps,
le filtrage comprenant les étapes consistant à :

- additionner à chaque fois les valeurs déterminées après une durée prédéterminée ΔT1 pour la réserve de puissance ou la surcharge DP pour donner une somme DPI, jusqu'à ce que la somme DPI ait atteint une valeur seuil supérieure ou inférieure,
- amorcer une réinitialisation avec un nouveau point de départ pour la durée ΔT1 et mettre à 0 la somme DPI, une fois que la somme DPI a atteint la valeur seuil supérieure ou inférieure,
- déterminer une durée $ΔT_2$ jusqu'à l'obtention de la valeur seuil supérieure ou inférieure et
- associer à la durée $ΔT_2$ déterminée un signal PSV, qui code la réserve de puissance ou la surcharge filtrée en fonction de la valeur seuil soit supérieure soit inférieure qui a été atteinte.

**32.** Procédé de gestion d'énergie selon la revendication 31,
**caractérisé en ce que**
la détermination de la puissance maximale pouvant être fournie $P_{max}$ du générateur s'effectue dans l'étape a) dans au moins deux étapes partielles

a') détection d'un régime n d'un moteur du véhicule et d'une température T significative pour une température du générateur et
a") détermination de la puissance maximale pouvant être fournie $P_{max}$ du générateur à partir du régime n et de la température T.

FIG.1

## FIG.2

FSH

26

24

16a, 16i

$U_{grenze}$
$I_{gen}$
$I_{batt}$
$U_{batt}$
$P_{gen}$
n. T

10

K

DP

12

PS

14a

Handshake

PPi

$I_{batt}$
$U_{batt}$

14b

NAS

20

NASi

18a, 18i

n+

ON/OFF 18i

22

Handshake NAS

EP 1 293 388 B1

## FIG.3

$n.\,T \longrightarrow$ [  ] $\xrightarrow{P_{max}}$ [  ] $\xrightarrow{}$ DP

$U_{grenze}$

$I_{gen}$

$I_{batt}$

$U_{batt}$

$P_{gen}$

## FIG.5

DP $\longrightarrow$ [ 28 ] $\xrightarrow{DPI}$ [ 30 ] $\xrightarrow{}$ PS

FIG.4

FIG.6

PSV= (2) 0 0 0 0 0 0 0 0 1 0 0 0 0 0 0 0 0 7 0 0 0 0 0 0 0 0 7 0 0 0 0 0 0 0 7
PS=   0 0 0 0 0 0 0 0 1 0 0 0 0 0 0 0 0 7 0 0 0 0 0 0 0 0 7 0 0 0 0 0 0 0 7

EP 1 293 388 B1

FIG. 7

EP 1 293 388 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19857916
- DE 19745849
- DE 19610927
- US 6208931 B1
- EP 1103426 A1